# EUROPEAN PATENT SPECIFICATION

(11) **EP 3 854 114 B1**
(45) Date of publication and mention of the grant of the patent: **20.04.2022**
(21) Application number: 18789257.5
(22) Date of filing: 20.09.2018
(51) Int. Cl.: H04W 4/20, H04W 4/02, H04W 4/021, H04L 67/566, G01S 5/02, G01S 19/05, H04W 64/00

(54) **LOCATION INFORMATION FOR MULTIPLE USER EQUIPMENTS**
ORT-INFORMATION FÜR MEHRERE BENUTZER-ENDGERÄTE
INFORMATIONS DE LOCALISATION POUR ÉQUIPEMENTS UTILISATEURS MULTIPLES

(43) Date of publication of application: 28.07.2021
(73) Proprietor: TELEFONAKTIEBOLAGET LM ERICSSON (PUBL), 164 83 Stockholm (SE)
(72) Inventor: HENRIKSSON, Daniel, 583 32 Linköping (SE); ENGSTRÖM, Stefan, 583 32 Linköping (SE)
(74) Representative: Ericsson
(86) International application number: PCT/SE2018/050957
(87) International publication number: WO 2020/060456

(56) References cited:
- "3 Generation Partnership Project; Technical Specification Group Radio Access Network; Evolved Universal Terrestrial Radio Access Network (E-UTRAN); Stage 2 functional specification of User Equipment (UE) positioning in E-UTRAN (Release 15)", 3GPP STANDARD; TECHNICAL SPECIFICATION; 3GPP TS 36.305, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V15.0.0, 6 July 2018 (2018-07-06), pages 1-85, XP051474808, [retrieved on 2018-07-06]
- "3rd Generation Partnership Project; Technical Specification Group Radio Access Network; Evolved Universal Terrestrial Radio Access (E-UTRA); LTE Positioning Protocol A (LPPa) (Release 15)", 3GPP STANDARD; TECHNICAL SPECIFICATION; 3GPP TS 36.455, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. V15.0.0, 22 June 2018 (2018-06-22), pages 1-83, XP051473946, [retrieved on 2018-06-22]
- "3rd Generation Partnership Project; Technical Specification Group Services and System Aspects; Functional stage 2 description of Location Services (LCS) (Release 15)", 3GPP DRAFT; 23271-F10, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 17 September 2018 (2018-09-17), XP051477320, Retrieved from the Internet: URL:http://www.3gpp.org/ftp/3guInternal/3G PP%5Fultimate%5Fversions%5Fto%5Fbe%5Ftrans posed/sentToDpc [retrieved on 2018-09-17]
- "3rd Generation Partnership Project; Technical Specification Group Core Network and Terminals; Location Services (LCS); LCS Application Protocol (LCS-AP) between the Mobile Management Entity (MME) and Evolved Serving Mobile Location Centre (E-SMLC); SLs interface (Release 15)", 3GPP STANDARD; TECHNICAL SPECIFICATION; 3GPP TS 29.171, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. V15.0.0, 18 June 2018 (2018-06-18), pages 1-63, XP051451751, [retrieved on 2018-06-18]
- "3rd Generation Partnership Project; Technical Specification Group Core Network and Terminals; Location Services (LCS); Evolved Packet Core (EPC) LCS Protocol (ELP) between the Gateway Mobile Location Centre (GMLC) and the Mobile Management Entity (MME); SLg interface (Release 15)", 3GPP STANDARD; TECHNICAL SPECIFICATION; 3GPP TS 29.172, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. V15.0.0, 23 June 2018 (2018-06-23), pages 1-43, XP051474082, [retrieved on 2018-06-23]

## Description

### TECHNICAL FIELD

The proposed technology generally relates to methods and devices for positioning and assisting in positioning of user equipment in a telecommunication system.

### BACKGROUND

Positioning in Long-Term Evolution (LTE) systems is based on position requests being sent to a Mobility Management Entity (MME) from a Gateway Mobile Location Centre (GMLC). The MME then forwards the requests to an Evolved-Serving Mobile Location Centre (E-SMLC). The positioning is performed using direct interaction between a User Equipment (UE) and the location server, i.e. the E-SMLC, via the LTE Positioning Protocol (LPP). Moreover, there is also interaction between the location server and the eNode B via the LTE Positioning Protocol appendix (LPPa) protocol, to some extent supported by interaction between the eNode B and the UE via the Radio Resource Control (RRC) protocol.

All LPPa based signalling requesting measurements is associated to one single UE. This means that the signalling load scales with the number of connected UEs. This is problematic if the information about the positions of a set of connected UEs is needed or if UEs in a certain subarea of the cell need to be reached.

The following documents are prior art: "3rd Generation Partnership Project; Technical Specification Group Radio Access Network; Evolved Universal Terrestrial Radio Access Network (E-UTRAN); Stage 2 functional specification of User Equipment (UE) positioning in E-UTRAN (Release 15)", 3GPP STANDARD; TECHNICAL SPECIFICATION; 3GPP TS 36.305, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V15.0.0, 6 July 2018 (2018-07-06), pages 1-85, XP051474808 [retrieved on 2018-07-06]

3rd Generation Partnership Project; Technical Specification Group Radio Access Network; Evolved Universal Terrestrial Radio Access (E-UTRA); LTE Positioning Protocol A (LPPa) (Release 15)",3GPP STANDARD; TECHNICAL SPECIFICATION; 3GPP TS 36.455, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. V15.0.0, 22 June 2018 (2018-06-22), pages 1-83, XP051473946 [retrieved on 2018-06-22]

"3rd Generation Partnership Project; Technical Specification Group Services and System Aspects; Functional stage 2 description of Location Services (LCS) (Release 15)", 3GPP DRAFT; 23271-F10, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 17 September 2018 (2018-09-17), XP051477320 Retrieved from the Internet:URL:http://www.3gpp.org/ ftp/3guInternal/3GPP%5Fultimate%5Fversions%5Fto%5Fbe %5Ftransposed/sentToDpc [retrieved on 2018-09-17]

3rd Generation Partnership Project; Technical Specification Group Core Network and Terminals; Location Services (LCS); LCS Application Protocol (LCS-AP) between the Mobile Management Entity (MME) and Evolved Serving Mobile Location Centre (E-SMLC); SLs interface (Release 15)", 3GPP STANDARD; TECHNICAL SPECIFICATION; 3GPP TS 29.171, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. V15.0.0, 18 June 2018 (2018-06-18), pages 1-63, XP051451751 [retrieved on 2018-06-18]

"3rd Generation Partnership Project; Technical Specification Group Core Network and Terminals; Location Services (LCS); Evolved Packet Core (EPC) LCS Protocol (ELP) between the Gateway Mobile Location Centre (GMLC) and the Mobile Management Entity (MME); SLg interface (Release 15)", 3GPP STANDARD; TECHNICAL SPECIFICATION; 3GPP TS 29.172, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. V15.0.0, 23 June 2018 (2018-06-23), pages 1-43, XP051474082 [retrieved on 2018-06-23]

### SUMMARY

It is an object to provide procedures to handle multi-UE positioning in a resource-efficient manner.

This and other objects are met by embodiments of the proposed technology.

According to independent claim 1, there is provided a method for assisting in positioning of UEs in a telecommunication system. The method comprises initiating, in a network node, a collection of position-related UE information of a plurality of UEs in response to an obtained measurement initiation request. The measurement initiation request comprises requests for the position-related UE information associated with a defined area, of which at least a part is situated within a coverage area of the network node. The position-related UE information comprises at least a location of the UE. A forming of a measurement reply to the measurement initiation request is initiated in the network node. The measurement reply comprises a compilation of at least a part of the position-related UE information for the plurality of UEs.

According to independent claim 7, there is provided a method for assisting in positioning of UEs in a telecommunication system. The method comprises obtaining, in a MME, of a measurement initiation request. The measurement initiation request comprises requests for position-related UE information of a plurality of UEs associated with a defined area. A forwarding of the measurement initiation request to a network node, preferably an eNode B, is initiated in the MME. The network node has a coverage area, within which at least a part of the defined area is situated. A compilation of UE location information for the plurality of UEs is created in the MME. The compilation is based on position-related UE information for the plurality of UEs obtained as a measurement reply of the measurement initiation request from the network node. The position-related UE information for the plurality of UEs comprises at least a location of the UE. A transmitting of a compiled measurement report is initiated in the MME. The compiled measurement report comprises the compilation of UE location information for the plurality of UEs.

According to independent claim 8, there is provided a method for assisting in positioning of UEs in a telecommunication system. The method comprises initiating, in a GMLC, of a transmission of a location request intended for an E-SMLC. The location request comprises requests for UE location information of a plurality of UEs associated with a defined area. A location reply is obtained in the GMLC. The location reply comprises a location compilation for the plurality of UEs associated with the defined area. The location reply is created by the E-SMLC.

According to independent claim 9, there is provided a method for positioning of UEs in a telecommunication system. The method comprises initiating, in an E-SMLC, of a transmission of a measurement initiation request. The measurement initiation request comprises requests for position-related UE information of a plurality of UEs associated with a defined area. A location compilation for a plurality of UEs associated with a defined area is created in the E-SMLC as a response of a compiled measurement report. The location compilation is based on a compilation of position-related UE location information for the plurality of UEs received in the compiled measurement report.

According to independent claim 10, there is provided a network node for communication in a cellular communication system. The network node is configured for initiating a collection of position-related UE information of a plurality of UEs as a response on an obtained measurement initiation request. The measurement initiation request comprises requests for the position-related UE information associated with a defined area. At least a part of the defined area is situated within a coverage area of the network node. The position-related UE information comprises at least a location of the UE. The network node is further configured for initiating a forming of a measurement reply to the measurement initiation request. The measurement reply comprises a compilation of at least a part of the position-related UE information for the plurality of UEs.

According to independent claim 11, there is provided a MME for communication in a cellular communication system. The MME is configured for obtaining a measurement initiation request. The measurement initiation request comprises requests for position-related UE information of a plurality of UEs associated with a defined area. The MME is further configured for initiating a forwarding of the measurement initiation request to a network node, preferably an eNode B. The network node has a coverage area, within which at least a part of the defined area is situated. The MME is further configured for creating a compilation of UE location information for the plurality of UEs. The compilation is based on position-related UE information for the plurality of UEs obtained as a measurement reply of the measurement initiation request from the network node. The position-related UE information for the plurality of UEs comprises at least a location of the UE. The MME is further configured for initiating a transmission of a compiled measurement report. The compiled measurement report comprises the compilation of UE location information for the plurality of UEs.

According to independent claim 12, there is provided a GMLC for communication in a cellular communication system. The GMLC is configured for initiating transmission of a location request intended for an E-SMLC. The location request comprises requests for UE location information of a plurality of UEs associated with a defined area. The GMLC is further configured for obtaining a location reply. The location reply comprises a location compilation for the plurality of UEs associated with the defined area. The location reply is created by the E-SMLC.

According to independent claim 13, there is provided an E-SMLC for communication in a cellular communication system, The E-SMLC is configured for initiating a transmission of a measurement initiation request. The measurement initiation request comprises requests for position-related UE information of a plurality of UEs associated with a defined area. The E-SMLC is configured for creating a location compilation for a plurality of UEs associated with a defined area. The location compilation is created as a response of a compiled measurement report. The location compilation is based on a compilation of position-related UE location information for the plurality of UEs received in the compiled measurement report.

According to independent claim 14, there is provided a computer program comprising instructions, which when executed by at least one processor, cause the processor(s) to initiate a collection of position-related UE information of a plurality of UEs as a response on an obtained measurement initiation request. The measurement initiation request comprises requests for the position-related UE information associated with a defined area, of which at least a part is situated within a coverage area of a network node. The position-related UE information comprises at least a location of the UE. The instructions, when executed by the processor(s), further cause the processor(s) to initiate a forming of a measurement reply to the measurement initiation request. The measurement reply comprises a compilation of at least a part of the position-related UE information for the plurality of UEs.

According to independent claim 15, there is provided a computer-program product comprising a computer-readable medium having stored thereon the computer program of claim 14. An advantage of the proposed technology is that it offers the possibility to request and report the amount of UEs in a specific location, the IDs of several

UEs in a specific location and the location for all active UEs in the cell with reduced amount of signalling.

Other advantages will be appreciated when reading the detailed description.

### BRIEF DESCRIPTION OF THE DRAWINGS

The embodiments, together with further objects and advantages thereof, may best be understood by making reference to the following description taken together with the accompanying drawings, in which:
FIG. 1 schematically illustrates a LTE positioning architecture;
FIG. 2 illustrates an example of an existing signalling chart;
FIG. 3 illustrates measurement initiation signalling between E-SMLC and eNB for LPPa based E-CID;
FIG. 4 illustrates measurement report signalling;
FIG. 5 illustrates an embodiment of a signalling chart for multiple UEs;
FIG. 6 is a schematic flow diagram illustrating steps of an embodiment of a method for assisting in positioning of UEs in a telecommunication system;
FIG. 7 is a schematic flow diagram illustrating steps of an embodiment of another method for assisting in positioning of UEs in a telecommunication system;
FIG. 8 is a schematic flow diagram illustrating steps of an embodiment of yet another method for assisting in positioning of UEs in a telecommunication system;
FIG. 9 is a schematic flow diagram illustrating steps of an embodiment of a method for positioning of UEs in a telecommunication system;
FIG. 10 is a schematic block diagram illustrating an embodiment of a network node;
FIG. 11 is a schematic block diagram illustrating an embodiment of a network node, a eNode B, an MME, A GMLC or an E-SMLC based on a hardware circuitry implementation;
FIG. 12 is a schematic block diagram illustrating another embodiment of a network node, a eNode B, an MME, A GMLC or an E-SMLC based on combination of both processor and hardware circuitry;
FIG. 13 is a schematic diagram illustrating an embodiment of a computer-implementation of a network node, an eNode B, an MME, A GMLC or an E-SMLC;
FIG. 14 is a schematic block diagram illustrating an embodiment of a network device;
FIG. 15 is a schematic diagram illustrating an embodiment of an eNode B;
FIG. 16 is a schematic diagram illustrating an embodiment of a MME;
FIG. 17 is a schematic diagram illustrating an embodiment of a GMLC;

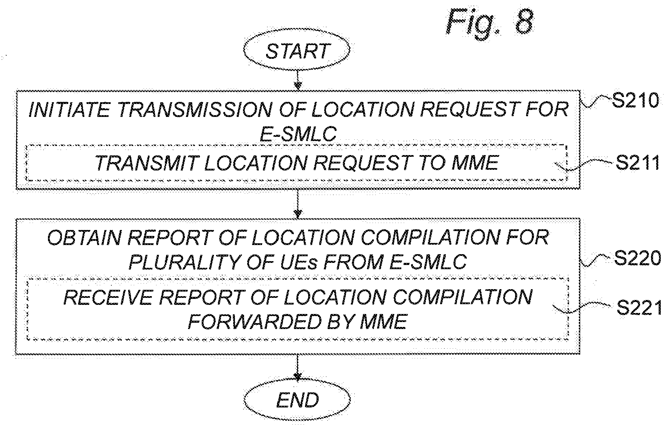

FIG. 8is a schematic diagram illustrating an embodiment of an E-SMLC;

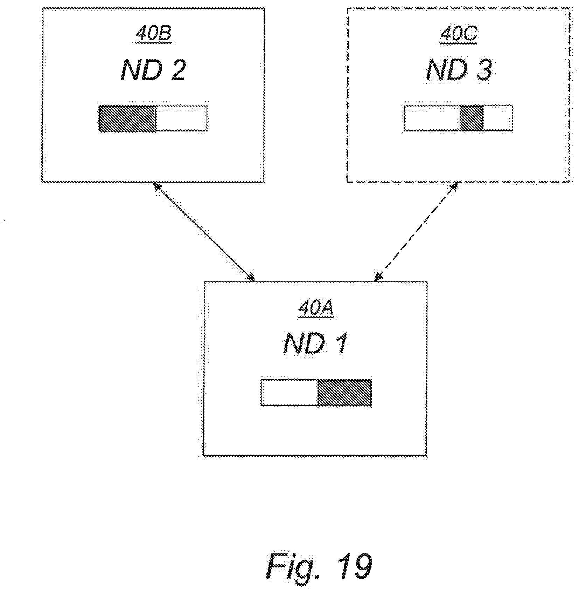

FIG. 19 is a schematic diagram illustrating a general example of functionality distribution or partition; and

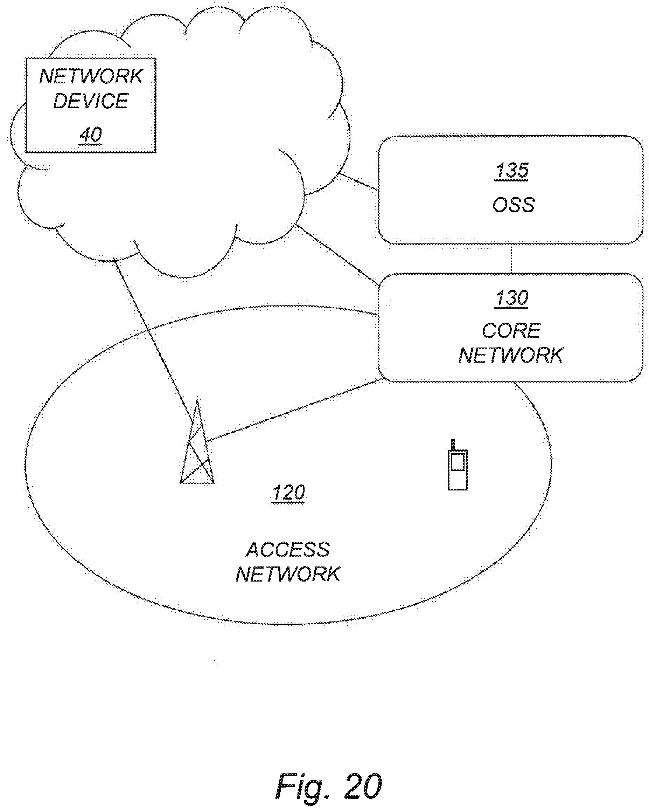

FIG. 20 is a schematic diagram illustrating an example of a wireless communication system in cooperation with one or more cloud-based network devices.

### DETAILED DESCRIPTION

Throughout the drawings, the same reference designations are used for similar or corresponding elements.

For a better understanding of the proposed technology, it may be useful to begin with a brief overview of positioning in present systems.

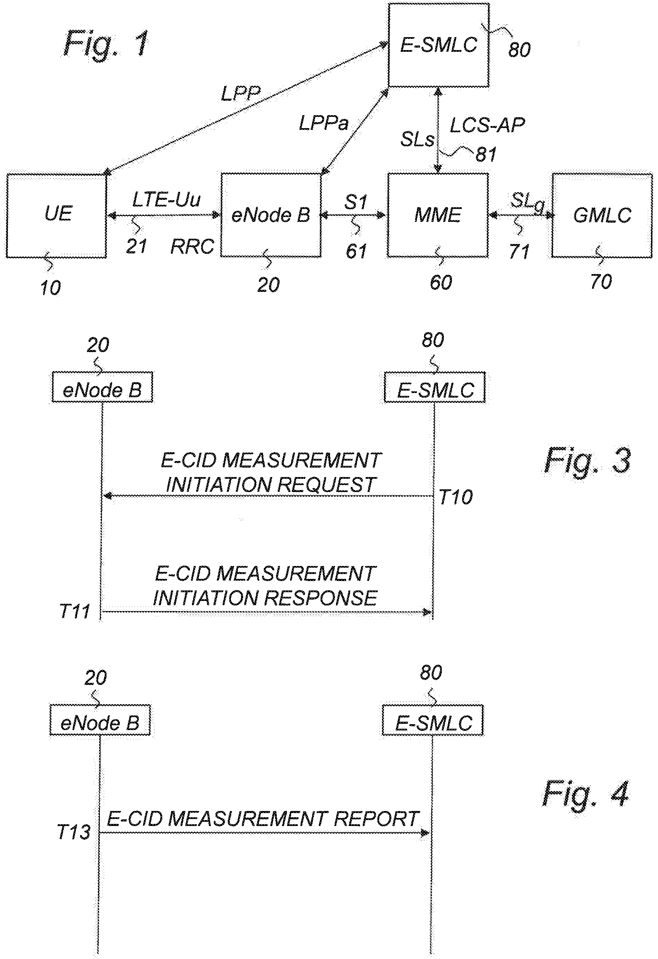

Positioning in LTE is supported by an architecture depicted in Figure 1. As mentioned briefly in the background, position requests are sent from the GMLC 70 over a SL_{g} interface 71 to the MME 60. The MME 60 forwards the requests over a SLs interface 81 to the E-SMLC 80 using a Location Services Application Protocol (LCS-AP). The positioning is performed using direct interaction between a UE 10 and the E-SMLC 80 via the LPP. Moreover, there is also interaction between the E-SMLC 80 and the eNode B 20 via an LPPa protocol, to some extent supported by interaction between the eNode B 20 and the UE 10 over the LTE-Uu interface 21 via the Radio Resource Control (RRC) protocol. The MME 60 interacts with the eNode B 20 over a S1 interface 61.

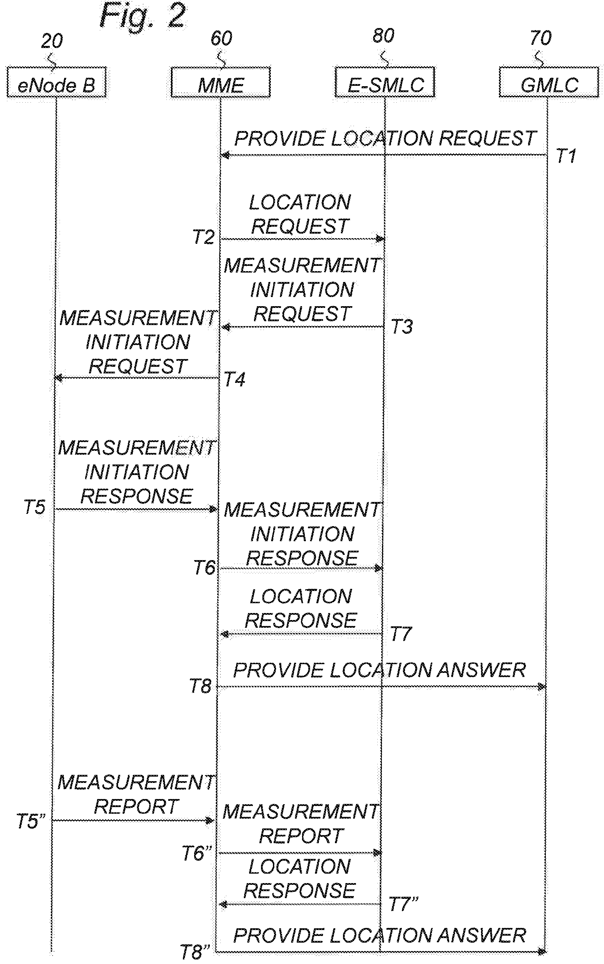

The overall signalling procedure can be described in connection with Figure 2. In the signalling chart, the messages used in prior art for performing a positioning procedure are shown. At T1, a location request is provided, in a Provide Location Request message, from the GMLC 70 to the MME 60. At T2 the MME 60 sends a location request, in a Location Request message, to the E-SMLC 80. At T3, the E-SMLC 80 replies with a Measurement Initiation Request in a Connection Oriented Information message, to the MME 60. The MME 60 communicates at T4 a Measurement Initiation Request in a DownLink (DL) non-UE associated LPPa transport message, to the concerned eNode B 20. The eNode B 20 replies at T5 with the measurement results as Measurement Initiation Response in an UpLink (UL) non-UE associated LPPa transport message, to the MME 60. At T6, the MME 60 forwards this information as Measurement Initiation Response in a Connection Oriented Information message, to the E-SMLC 80. The E-SMLC 80, responses at T7 with a location response to the MME 60. Finally, the MME 60 provides at T8 a location answer to the GMLC 70. Subsequent measurements, if any, can be communicated analogously at T5"-T8" providing an updated location.

In Figure 1 it is shown that the LPPa protocol is used when E-SMLC is requesting positioning information from eNB. Figure 2 shows the messages used for transmitting an LPPa message between E-SMLC and eNB. The actual LPPa message is carried inside the messages in Figure 2.

A number of positioning techniques are supported in LTE. Enhanced Cell ID (E-CID) is essentially cell ID information to associate the UE with the serving area of a serving cell. Additional information enables a higher accuracy on the estimated position.

Assisted Global Navigation Satellite System (GNSS) is GNSS information retrieved by the UE, supported by assistance information provided to the UE from E-SMLC.

Observed Time Difference of Arrival (OTDOA) is based on that the UE estimates the time difference of reference signals from different base stations and sends to the E-SMLC for multilateration.

Uplink Time Difference of Arrival (UTDOA) is based on that the UE is requested to transmit a specific waveform that is detected by multiple location measurement units (e.g. an eNB) at known positions. These measurements are forwarded to E-SMLC for multilateration.

The Enhanced Cell ID method can be performed both using LPP and LPPa. When using LPPa based E-CID, the E-SMLC requests information from the eNB. It could be both parameters that are known within the eNB, such as Timing Advance (TA) and Angle of Arrival (AoA), and parameters that needs to be measured by the UE, e.g. as the Reference Signal Received Power (RSRP).

The message flow between E-SMLC and eNB at a successful operation can be illustrated by Figure 3. An E-CID measurement initiation request is sent at T10 from the E-SMLC 80 to the eNode B 20. The E-CID measurement initiation request contains the measurement order and which parameters that the E-SMLC 80 wants to have. The measurement order can be either a single measurement or periodic measurements. An E-CID measurement initiation response is returned at T11 from the eNode B 20 to the E-SMLC 80, containing the measured parameters.

As is illustrated in Figure 4, for reporting periodic measurements, an E-CID measurement report can be used. This report is illustrated at T13 from the eNode B 20 to the E-SMLC 80.

An example of an E-CID measurement initiation request according to 3GPP used for requesting measurement and specify which type of measurement that E-SMLC will request is presented in Table 1.

**Table 1. E-CID measurement initiation request.**

| **IE/Group Name** | **Presence** | **Range** | **IE type and reference** | **Critically** | **Assigned Criticality** |
|---|---|---|---|---|---|
| Message Type | M | | 9.2.3 | YES | reject |
| LPPa Transaction ID | M | | 9.2.4 | - | |
| E-SMLC Measurement ID | M | | INTEGER (1..15,...) | YES | reject |
| Report Characteristics | M | | ENUMERATED (OnDemand, Periodic,...) | YES | reject |
| Measurement Periodicity | C-ifReportC haracteris ticsPeriod | | ENUMERATED (120 ms, 240 ms, 480 ms, 640 ms, 1024 ms, 2048 ms, 5120 ms, 10240 ms, 1 min, 6 min, 12 min, 30 min, 60 min,...) | YES | reject |
| Measurement Quantities | | 1..<m axno Meas> | | EACH | reject |
| >Measurement Quantities Item | M | | ENUMERATED (Cell-ID, Angle of Arrival, Timing Advance Type 1, Timing Advance | - | - |
| | | | Type 2, RSRP, RSRQ,...) | | |
| Inter-RAT Measurement Quantities | | 0.. <max noMe as> | | EACH | ignore |
| >Inter-RAT Measurement Quantities Item | M | | ENUMERATED (GERAN, UTRAN,...) | | |

The messages E-CID MEASUREMENT INITIATION RESPONSE and E-CID MEASUREMENT REPORT both contain an E-CID MEASURMENT RESULT IE, which is presented in Table 2.

**Table 2. E-CID measurement result.**

| **IE/Group Name** | **Presence** | **Range** | **IE Type and Reference** | **Semantics Description** |
|---|---|---|---|---|
| Serving Cell ID | M | | ECGI 9.2.6 | E-UTRAN Cell Identifier of the serving cell |
| Serving Cell TAC | M | | OCTET STRING(2) | Tracking Area Code of the serving cell |
| E-UTRAN Access Point Position | O | | 9.2.8 | The configured estimated geographical position of the antenna of the cell |
| Measured Results | | 0.. <max noMe as> | | |
| >CHOICE Measures Results Value | M | | | |
| >>Value Angle of Arrival | M | | INTEGER (0..719) | According to mapping in TS 36.133 |
| >>Value Timing Advance Type 1 | M | | INTEGER (0..7690) | According to mapping in TS 36.133 |
| >>Value Timing Advance Type 2 | M | | INTEGER (0..7690) | According to mapping in TS 36.133 |
| >>Result RSRP | | 1.. <max CellRe port> | | |
| >>>PCI | M | | INTEGER (0..503,...) | Physical Cell Identifier of the reported cell |
| >>>EARFCN | M | | INTEGER (0..65535,... ,65536.. 262143) | Corresponds to NDL for FDD and NDL/UL for TDD in ref TS 36.104 |
| >>>ECGI | O | | ECGI 9.2.6 | E-UTRAN Cell Global Identifier of the reported cell |
| >>>Value RSRP | M | | INTEGER (0..97,...) | |
| >>Result RSRQ | | 1. <max CellRe port> | | |
| >>>PCI | M | | INTEGER (0..503,...) | Physical Cell Identifier of the reported cell |
| >>>EARFCN | M | | INTEGER (0..65535,... ,65536.. 262143) | Corresponds to NDL for FDD and NDL/UL for TDD in ref TS 36.104 |
| >>>ECGI | O | | ECGI 9.2.6 | E-UTRAN Cell Global Identifier of the reported cell |
| >>>Value RSRP | M | | INTEGER (0..34,...) | |

The LPPa is carried in an S1-AP message between the MME and eNB. It could be of two different types: UE associated and non-UE associated. The standardized E-CID is an example of a UE associated message, since it requests E-CID information about a specific UE, while the non-UE associated messages are used for requesting configuration of for example OTDOA parameters for one cell in the eNB.

The two different message types of UE associated LPPa transport are presented in Table 3 and Table 4.

**Table 3. Downlink UE associated LPPa transport.**

| **IE/Group Name** | **Presence** | **IE type and reference** | **Critically** | **Assigned Criticality** |
|---|---|---|---|---|
| Message Type | M | 9.2.1.1 | YES | ignore |
| MME UE S1AP ID | M | 9.2.3.3 | YES | reject |
| eNB UE S1AP ID | M | 9.2.3.4 | YES | reject |
| Routing ID | M | 9.2.3.33 | YES | reject |
| LPPa-PDU | M | 9.2.3.32 | YES | reject |

**Table 4. Uplink UE associated LPPa transport.**

| **IE/Group Name** | **Presence** | **IE type and reference** | **Critically** | **Assigned Criticality** |
|---|---|---|---|---|
| Message Type | M | 9.2.1.1 | YES | ignore |
| MME UE S1AP ID | M | 9.2.3.3 | YES | reject |
| eNB UE S1AP ID | M | 9.2.3.4 | YES | reject |
| Routing ID | M | 9.2.3.33 | YES | reject |
| LPPa-PDU | M | 9.2.3.32 | YES | reject |

The two different message types of non UE associated LPPa transport are presented in Table 5 and Table 6.

**Table 5. Downlink non UE associated LPPA transport.**

| **IE/Group Name** | **Presence** | **IE type and reference** | **Critically** | **Assigned Criticality** |
|---|---|---|---|---|
| Message Type | M | 9.2.1.1 | YES | ignore |
| Routing ID | M | 9.2.3.33 | YES | reject |
| LPPa-PDU | M | 9.2.3.32 | YES | reject |

**Table 6. Uplink non UE associated LPPA transport.**

| **IE/Group Name** | **Presence** | **IE type and reference** | **Critically** | **Assigned Criticality** |
|---|---|---|---|---|
| Message Type | M | 9.2.1.1 | YES | ignore |
| Routing ID | M | 9.2.3.33 | YES | reject |
| LPPa-PDU | M | 9.2.3.32 | YES | reject |

The LPPa specification the E-CID method has also been expanded with the possibility for the eNB to report a cell portion to the E-SMLC. The cell portion is an integer between 0 and 255 that could be used to represent a sub-part of the cell. How E-SMLC should interpret each cell portion number is not part of the LPPa specification and needs to be decided in another way.

As described above, the present alternatives for determining locations or areas of locations of UEs are all limited to single UEs. If many UEs or a group of UEs are to be considered, the signalling load will thus multiply with the number of UEs. All such location requests will pass the MME, and all measurement initiations for UEs served by the same eNB will evidently pass the concerned eNB. By introducing a few modifications in the signalling protocols, such parallel signalling can be replaced by a common signalling.

In the presently presented technology, the overall signalling paths are to a certain degree preserved. However, by incorporating new information entities, completely new types of functionalities can be provided by a minimum of additional signalling resources. To be able to support the new functionalities some changes/expansions of the existing signals and IE are needed.

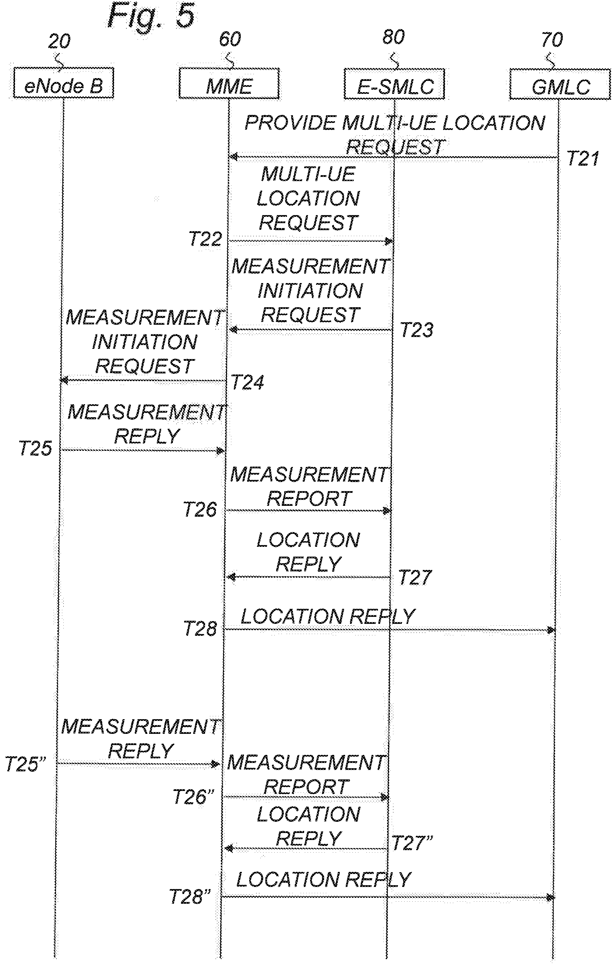

Figure 5 illustrates a signalling diagram that shows an end to end procedure. At T21, a location request for a multitude of UEs is provided from the GMLC 70 to the MME 60. At T22 the MME 60 sends a multi-UE location request to the E-SMLC 80.

This multi-UE location request comprises requests for UE location information of a plurality of UEs associated with a defined area. In different embodiments, different new use cases can be made available. In an exemplifying embodiment functionality for three new use cases are added, which can be selected by request. A first use case is to provide a list of identities for UEs in a specified location. A second use case is to provide the amount of UEs in a specified location. A third use case is to provide a list of geographic locations for several UEs in an area.

In other words, in one embodiment, a measurement initiation request comprises at least one of a request for an amount of UEs in a defined area, a request for identities of all UEs in a defined area; and a request for a respective location for all active UEs in a defined area.

In alternative embodiments, single use cases or any combination of two of the mentioned use cases can be made available.

In the present embodiment, in T21 and T22, new values for the location type information entities are introduced to support requests for the uses cases. This may e.g. be introduced in the Evolved Packet Core Location Services Protocol (ELP) and LCS-AP. For instance, a request for a list of identities of several UEs in a specified area can be a ueIdList IE, a request for a numbers of UEs in a specified area can be a ueAmount IE, and requests for the location of several UEs in one area can be a geographicLocationList IE. For the use cases, the location request also has to be amended with an IE specifying the area for which the request is valid. In the case of requesting the location of several UEs in one area, the location request has also to be amended with an IE specifying the smaller area or type of position estimate that is requested for each UE.

The Location request is preferably sent from MME to E-SMLC and utilizes for instance a LCS-AP Connectionless Information message. This will be further discussed in connection with the location reply.

At T23, the E-SMLC 80 replies with a measurement initiation request to the MME 60. The MME 60 communicates at T24 a subsequent measurement initiation request to the concerned eNode(s) B 20. The LPPa Measurement Initiation Request or corresponding message has thus to be updated with the corresponding new IEs as mentioned above.

In the following, there are described embodiments of changes in some of the messages and IEs mentioned above. Note that the following parts are only examples showing how to expand messages when cell portion is used to represent the specific location of the UE. However, as previously mentioned other parameters can also be used to define a geographical area, for example a Timing Advance (TA) interval, angular sector etc.

An example of an E-CID measurement initiation request is illustrated in Table 7. An E-CID measurement initiation request is preferably sent from the E-SMLC to the eNB as an LPPa message. In order to support the functionality presented herein, it needs to be expanded compared to prior art with IEs specifying which area the request is valid for. For example if IDs for all UEs in a specific cell portion is requested it could state that the E-CID measurement initiation request will be used to specify the actual cell portion. Table 7 shows an example of the modified E-CID measurement initiation request. This message is intended to be sent by E-SMLC to an eNode B to initiate E-CID measurements.

**Table 7. Examples of new IEs in an LPPa E-CID Measurement Initiation Request.**

| **IE/Group Name** | **Presence** | **Range** | **IE type and reference** | **Semantics description** |
|---|---|---|---|---|
| Message Type | M | | 9.2.3 | |
| LPPa transaction ID | M | | 9.2.4 | |
| E-SMLC Measurement ID | M | | INTEGER (1..15,...) | |
| Report Characteristics | | | ENUMERATED (OnDemand, Periodic, ...) | |
| Measurement Periodicity | C-ifReportCh aracteristic sPeriodic | | ENUMERATED (120 ms, 240 ms, 480 ms, 640 ms, 1024 ms, 2048 ms, 5120 ms, 10240 ms, 1 min, 6 | |
| | | | min, 12 min, 30 min, 60 min,...) | |
| Measurement Quantities | | 1 .. <maxno Meas> | | |
| >Measurement Quantities Item | M | | ENUMERATED (Cell-ID, Angle of Arrival, Timing Advance Type 1, Timing Advance Type 2, RSRP, RSRQ, Cell Portion ID, UEID, ...) | |
| Inter-RAT Measurement Quantities | | 0 .. <maxno Meas> | | |
| >Inter-RAT Measurement Quantities Item | M | | ENUMERATED (GERAN, UTRAN ,...) | |
| Request Area | | | | Area for which the request is valid |
| > Cell ID | | | ECGI 9.2.6 | |
| > Cell Portion ID | | | Cell Portion ID 9.2.12 | Given if part of cell area is requested |

Returning to Figure 5, the eNode B 20 replies with a measurement reply at T25 comprising the measurement results to the MME 60. These response messages are updated with a new IE containing a list of results for one or more areas.

An example illustrating the transfer of amount of UEs and UE location is shown in Table 8.

A measurement reply in the form of an E-CID measurement initiation response message could be expanded to enable the possibility to report location information and measurement data for multiple UEs. In Table 8, one embodiment of an expansion is illustrated. Note that it contains a reference to the area that the request is valid for together with position info and/or measurements for multiple UEs. This message is sent by eNode B to indicate that the requested E-CID measurement is successfully initiated.

**Table 8. Examples of new IEs in an LPPa E-CID Measurement Initiation Response.**

| **IE/Group Name** | **Presence** | **Range** | **IE type and reference** | **Semantics description** |
|---|---|---|---|---|
| Message Type | M | | 9.2.3 | |
| LPPa transaction ID | M | | 9.2.4 | |
| E-SMLC Measurement ID | M | | INTEGER (1..15,...) | |
| eNB UE Measurement ID | M | | INTEGER (1..15,...) | |
| E-CID Measurement Result | O | | 9.2.5 | |
| Criticality Diagnostics | O | | 9.2.2 | |
| Cell Portion ID | O | | 9.2.12 | |
| Inter-RAT Measurement Result | O | | 9.2.13 | |
| Area Location Result List | | 0..maxn oAreaRe sults | | |
| > Area Location Result | | | | |
| >> Area identity | | | | Area for which the result is valid |
| >>> Cell ID | | | ECGI 9.2.6 | |
| >>> Cell Portion ID | | | Cell Portion ID 9.2.12 | Given if part of cell area is requested |
| >> UE Amount | | 0.. | INTEGER (0.. ) | |
| » UE Location List | | 0..maxn oUELoca tions | | |
| >>> UE Location | | | | |
| >>>> E-CID Measurement Result | | | 9.2.5 | |
| >>>> Cell Portion ID | | | 9.2.12 | |
| >>>> Inter-RAT Measurement Result | | | 9.2.13 | |

The uplink non UE associated LPPa transport may in one embodiment be used for carrying the LPPa messages between the eNode B and the MME. The LPPa message itself does not contain any UE IDs. When responding to a request regarding position information for multiple UEs, the UE IDs need to be carried in the uplink non UE associated LPPa transport message. One embodiment of a modification is show in Table 9. Note that both the eNB UE S1-AP ID and MME UE S1-AP ID is present and that it is possible to include a list of UE IDs since the request/response can include position information for several UEs. This message is intended to be sent by the eNB and is used for carrying LPPa message over the S1 interface.

**Table 9. Examples of new IEs in an S1-AP uplink non UE associated LPPa transport message.**

| **IE/Group Name** | **Presence** | **Range** | **IE type and reference** | **Semantics description** |
|---|---|---|---|---|
| Message Type | M | | 9.2.1.1 | |
| Routing ID | M | | 9.2.3.33 | |
| LPPa-PDU | M | | 9.2.3.32 | |
| S1AP ID List | | 0..maxn oUELoca tions | | The order of S1AP IDs must be the same as the order of the location results in the LPPa-PDU |
| > S1AP ID | | | | |
| >> MME UE S1AP ID | | | 9.2.3.3 | |
| >> eNB UE S1AP ID | | | 9.2.3.4 | |

At T26, the MME 60 forwards this information to the E-SMLC 80, possibly with modified UE identities. The E-SMLC 80, responds at T27 with a location reply to the MME 60, comprising a compilation of location information based on the measurements.

The Location Reply sent from E-SMLC to MME utilizes preferably a LCS-AP Connectionless Information message as illustrated in Table 10. The message is modified to allow a reply for multiple UEs. This message conveys signalling information associated with a higher protocol level between an E-SMLC and another entity when there is no existing signalling connection association.

**Table 10. Examples of new IEs in an LCS-AP Connectionless Information message.**

| **IE/Group Name** | **Presence** | **Range** | **IE type and reference** | **Semantics description** |
|---|---|---|---|---|
| Message Type | M | | 7.4.2 | |
| Source Identity | M | | Network Element / 7.4.19 | |
| Destination Identity | M | | Network Element / 7.4.19 | |
| APDU | M | | 7.4.18 | |
| Return Error Request | O | | 7.4.20 | |
| Return Error Cause | O | | 7.4.21 | |
| UE ID List | | 0..maxn oUELoca tions | | The order of UE IDs must be the same as the order of the location results in the APDU |
| > UE ID | | | | |
| » IMSI | | | 7.4.10 | |
| » IMEI | | | 7.4.11 | |

Finally, the MME 60 provides at T28 the location reply to the GMLC 70.

Below, the location types used on a SLg interface between the GMLC and MME in one embodiment is illustrated. To support the end to end handling of the new positioning use cases introduced by this invention the SLg Location types need to be expanded.

The SLg-Location-Type AVP is of type Enumerated. The following values are defined:
CURRENT_LOCATION (0)
CURRENT_OR_LAST_KNOWN_LOCATION (1)
INITIAL_LOCATION (2)
ACTIVATE_DEFERRED_LOCATION (3)
CANCEL_DEFERRED_LOCATION (4)
NOTIFICATION_VERIFICATION_ONLY (5)
UE_ID_LIST (x)
UE_AMOUNT (y)
CURRENT_LOCATION_LIST (z)

Note that values (3) and (4) are only applicable over Lgd interface. If received over SLg interface, these values are treated as reserved.

Subsequent measurements, if any, can be communicated analogously at T25"-T28" providing an updated location.

Note that the location or area specified in the location request does not necessary mean just the actual location or position of a UE. It can for example refer to a cell portion, a subsector of a cell, an area within a TA range etc.

In the present disclosure, an "area" is considered to be the most general concept, which in turn may comprise one or more "locations". The "area" does not necessarily have a direct connection to the geographical configuration of the communication system and its cells. The "locations" are typically smaller parts and typically in some way connected to the communication system, such as a cell portion, a subsector of a cell, an area within a TA range, mentioned above. A more or less exact position of a UE may then be situated within such a "location".

In one embodiment, a defined area is a defined location, and a measurement initiation request may then comprise at least one of a request for an amount of UEs in the defined location and a request for identities of all UEs in the defined location.

From this description, it is seen that the technical effect is achieved by a cooperation between four nodes in a communication system, namely an eNode B, an MME, an E-SMLC and a GMLC. New routines are to be incorporated in the different nodes, in order for the entire procedure to operate. In other words, the methods in each of the concerned nodes operates in order to allow the entire procedure to work.

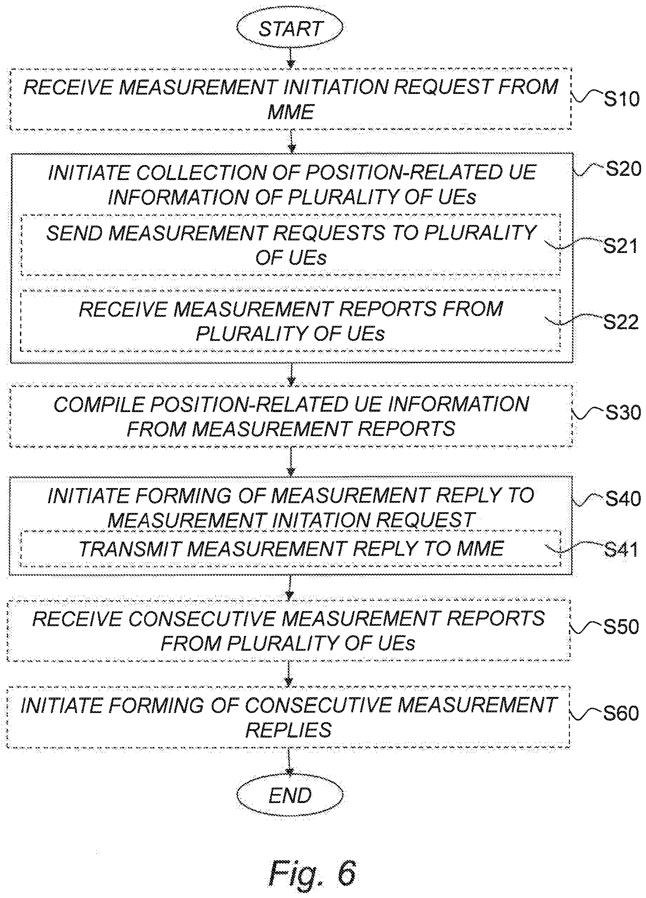

The methods performed in each of these nodes can also be described as such. Figure 6 illustrates a flow diagram of steps of an embodiment of a method for assisting positioning of UEs in a telecommunication system. This method is intended to be performed in an eNode B. For an LTE application, the eNode B is thus a so-called eNB. Preferably, in step S10, a measurement initiation request is received in an eNode B from the MME. Alternatively, a measurement initiation request can be obtained in other ways from the MME.

In step S20 in the present embodiment, a collection of position-related UE information of a plurality of UEs is initiated in the eNode B. This may be performed as a response on the obtained measurement initiation request. The measurement initiation request comprises requests for the position-related UE information associated with a defined area. At least a part of this area is situated within a coverage area of the eNode B. The position-related UE information comprises at least a location of the UE.

In a preferred embodiment, step S20 also comprises the substep S21, in which the measurement requests are sent to the plurality of UEs. The step S20 preferably also comprises the step S22, in which measurement reports from the plurality of UEs are received. In other words, the step of initiating the collection of position-related UE information comprises sending of measurement requests to the plurality of UEs and receiving measurement reports from the plurality of UEs comprising the position-related UE information.

In alternative embodiments, the measurement requests and measurement reports may be communicated in other ways to and from the UEs.

In the present embodiment, in step S40, a forming of a measurement reply to the measurement initiation request is initiated in the eNode B. The measurement reply comprises a compilation of at least a part of the position-related UE information for the plurality of UEs.

In a preferred embodiment, the method comprises the further step S30 of compiling the position-related UE information received from the plurality of UEs into the compilation of at least a part of the position-related UE information.

In alternative embodiments, the actual compilation may be performed by another node in communicational connection with the eNode B, whereby the eNode B provides the measurement results or parts thereof and receives the compilation or part thereof.

In a preferred embodiment, step S40 comprises the substep S41, in which the measurement reply is actually transmitted to the MME. In a further preferred embodiment, the methods comprises both step S41 and step S10.

Alternatively, a measurement reply can be provided to the MME in other ways.

As mentioned briefly above, the measurement initiation request may comprise a request of a repeated measurement operation. In such applications, the method preferably comprises the step S50, in which consecutive measurement reports are received, directly or indirectly, from the plurality of UEs comprising the position-related UE information for a consecutive time instant. Furthermore, in step S60, a forming of a consecutive measurement reply is initiated. The consecutive measurement reply comprises a compilation of at least a part of the position-related UE location information for the consecutive time instant for the plurality of UEs.

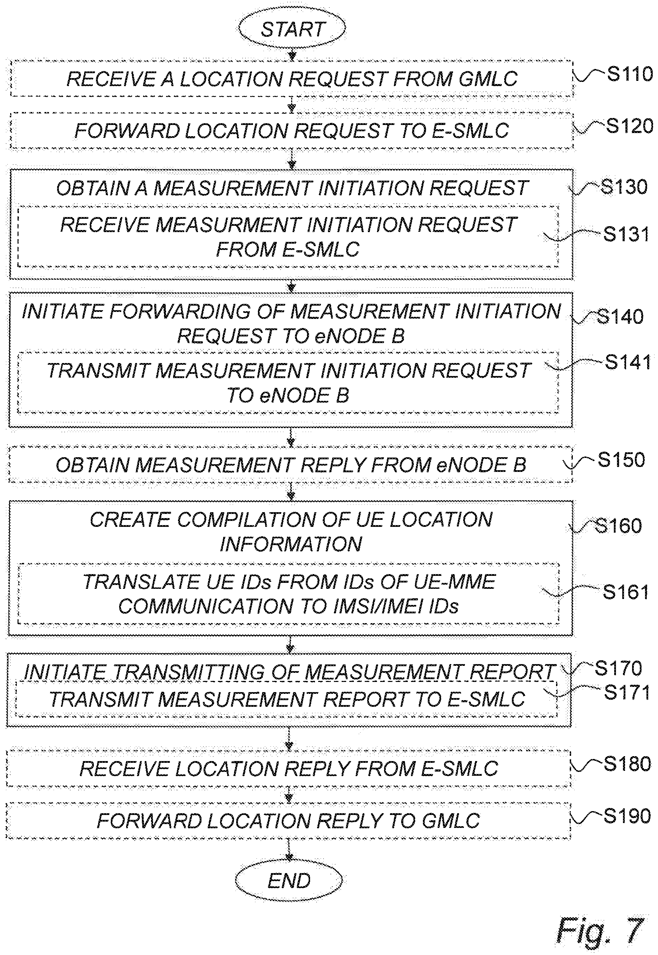

The process can also be seen from the view of a MME. Figure 7 illustrates a flow diagram of steps of an embodiment of a method for assisting positioning of UEs in a telecommunication system. The method is intended to be performed in a MME. In step S130, a measurement initiation request is obtained in a MME. The measurement initiation request comprises requests for position-related UE information of a plurality of UEs associated with a defined area.

In a preferred embodiment, this measurement initiation request is received from an E-SMLC, as indicated in substep S131. Alternatively, the measurement initiation request can be obtained in other ways.

The measurement initiation request is a response to a location request. In a preferred embodiment, this location request is received by the E-SMLC via the MME. To this end, in step S110, a location request is received in the MME from a GMLC. In step S120, the location request is forwarded to an E-SMLC.

In step S140, a forwarding of the measurement initiation request to an eNode B is initiated in the MME. The eNode B has a coverage area, within which at least a part of the defined area is situated. In a preferred embodiment, the MME not only initiates but also transmits the measurement initiation request, as indicated by step S141. Alternatively, the transfer of the measurement initiation request can be performed in other ways. If necessary due to the relation between the coverage areas of the eNode B and the requested defined area, the measurement initiation request may be forwarded to more than one eNode B.

In step S160, a compilation of UE location information for the plurality of UEs is created in the MME. The compilation is based on position-related UE information for the plurality of UEs obtained as a measurement reply of the measurement initiation request from the eNode B. The position-related UE information for the plurality of UEs comprises at least a location of the UE.

In a preferred embodiment, the step S160 of creating the compilation of UE location information comprises the substep S161, in which a translation of UE identities is performed from identities used for communication between the MME and the eNode B into international mobile subscriber identities and/or international mobile equipment identities.

The compilation of step S160 is performed based on measurement replies. Preferably, as illustrated by step S150, measurement replies are obtained from the eNode B.

In step S170, a transmitting of a compiled measurement report is initiated in the MME. The compiled measurement report comprises the compilation of UE location information for the plurality of UEs as obtained in step S160. Preferably, not only the initiation is performed in the MME, but the compiled measurement report is actually transmitted to the E-SMLC from the MME, as illustrated by substep 171.

In a preferred embodiment, the method in the MME further comprises step S180, in which a location reply is received from the E-SMLC. The method also preferably comprises the step S190, in which the location reply is forwarded to the GMLC.

The process can also be seen from the view of a GLMC. Figure 8 illustrates a flow diagram of steps of an embodiment of a method for assisting positioning of UEs in a telecommunication system. The method is intended to be performed in a GLMC. In step S210, a transmission of a location request is initiated in a GMLC. The location request is intended for an E-SMLC. The location request comprises requests for UE location information of a plurality of UEs associated with a defined area.

In a preferred embodiment, as indicated by substep S211, the location request is transmitted from the GMLC to a MME for being forwarded to the E-SMLC.

Alternatively, the location request can be transferred to the E-SMLC by other means.

In step S220, a location reply is obtained in the GMLC. The location reply comprises a location compilation for the plurality of UEs associated with the defined area. The location reply is created by the E-SMLC. Preferably, as indicated by substep S221, the location reply is received in the GMLC from the E-SMLC as forwarded by the MME.

Alternatively, the location reply can be transferred to the GMLC by other means.

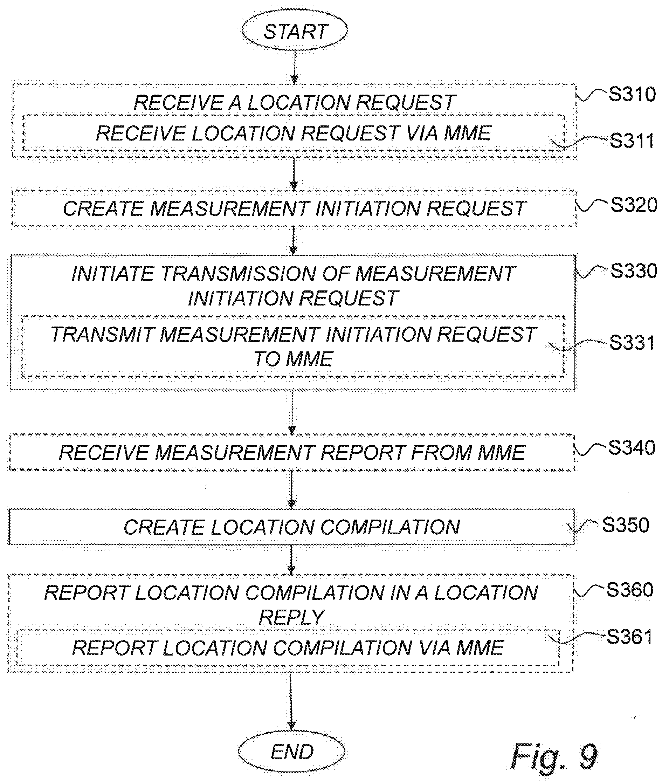

The process can also be seen from the view of an E-SMLC. Figure 9 illustrates a flow diagram of steps of an embodiment of a method for positioning of UEs in a telecommunication system. The method is intended to be performed in an E-SMLC. In step S330, a transmission of a measurement initiation request is initiated in an E-SMLC. The measurement initiation request comprises requests for position-related UE information of a plurality of UEs associated with a defined area.

In a preferred embodiment, as illustrated by substep S331, the measurement initiation request is transmitted to a MME. The measurement initiation request is then intended to be forwarded to an eNode B.

In a preferred embodiment, the measurement initiation request is created in the E-SMLC, as indicated by step S320. Further preferred, the measurement initiation request is created based on a location request. As illustrated by step S310, a location request is received in the E-SMLC. Preferably, the step of receiving S310 location request comprises the substep S311 of receiving the location request from the MME.

Alternatively, the location request can be obtained by the E-SMLC by other connections.

In step S350, a location compilation for plurality of UEs associated with a defined area is created in the E-SMLC. The location compilation is a response of a compiled measurement report. The location compilation is based on a compilation of position-related UE location information for the plurality of UEs received in the compiled measurement report.

In a preferred embodiment, as indicated by step S340, the compiled measurement report is received from a MME.

In a preferred embodiment, the E-SMLC comprises the further step S360 of reporting a location reply on the received location request comprising the location compilation. Further preferably, the step S360 of reporting the location reply comprises the substep S361 of reporting the location reply to the MME. The MME is then intended to forward the location reply to the origin of the location request, e.g. the GMLC.

In one embodiment, a method for positioning of UEs in a telecommunication system as described here above further comprises the steps performed in the eNode B and the steps performed in the MME. In a preferred embodiment, the method for positioning of UEs in a telecommunication system as described here above further also comprises the steps performed by the GMLC.

As used herein, the non-limiting terms "User Equipment (UE)", "station (STA)" and "wireless communication device" or "wireless device" may refer to a mobile phone, a cellular phone, a Personal Digital Assistant (PDA) equipped with radio communication capabilities, a smart phone, a laptop or Personal Computer (PC) equipped with an internal or external mobile broadband modem, a tablet PC with radio communication capabilities, a target device, a device to device UE, a machine type UE or UE capable of machine to machine communication, iPAD, Customer Premises Equipment (CPE), Laptop Embedded Equipment (LEE), Laptop Mounted Equipment (LME), Universal Serial Bus (USB) dongle, a portable electronic radio communication device, a sensor device equipped with radio communication capabilities or the like. In particular, the term "UE", the term "Station", the term "wireless device" and the term "wireless communication device" should be interpreted as non-limiting terms comprising any type of wireless device communicating with a network node in a wireless communication system and/or possibly communicating directly with another wireless communication device. In other words, a wireless communication device may be any device equipped with circuitry for wireless communication according to any relevant standard for communication.

As used herein, the non-limiting term "network node" may refer to base stations, access points, network control nodes such as network controllers, radio network controllers, base station controllers, access controllers, and the like. In particular, the term "eNode B", may encompass different types of radio base stations including standardized base stations such as Node Bs (NB), evolved Node Bs (eNB or eNode B) or New Radio Node B (gNB) and also macro/micro/pico radio base stations, home base stations, also known as femto base stations, relay nodes, repeaters, radio access points, Base Transceiver Stations (BTS), and even radio control nodes controlling one or more Remote Radio Units (RRU), or the like.

The term "evolved serving mobile location centre" (E-SMLC) is in the present disclosure encompassing also other nodes related to SMLC nodes.

In the following, the general non-limiting term "communication unit" includes network nodes and/or associated wireless devices.

As used herein, the term "network device" may refer to any device located in connection with a communication network, including but not limited to devices in access networks, core networks and similar network structures. The term network device may also encompass cloud-based network devices.

It will be appreciated that the methods and devices described herein can be combined and re-arranged in a variety of ways.

For example, embodiments may be implemented in hardware, or in software for execution by suitable processing circuitry, or a combination thereof.

The steps, functions, procedures, modules and/or blocks described herein may be implemented in hardware using any conventional technology, such as discrete circuit or integrated circuit technology, including both general-purpose electronic circuitry and application-specific circuitry.

Alternatively, or as a complement, at least some of the steps, functions, procedures, modules and/or blocks described herein may be implemented in software such as a computer program for execution by suitable processing circuitry such as one or more processors or processing units.

Examples of processing circuitry includes, but is not limited to, one or more microprocessors, one or more Digital Signal Processors (DSPs), one or more Central Processing Units (CPUs), video acceleration hardware, and/or any suitable programmable logic circuitry such as one or more Field Programmable Gate Arrays (FPGAs), or one or more Programmable Logic Controllers (PLCs).

It should also be understood that it may be possible to re-use the general processing capabilities of any conventional device or unit in which the proposed technology is implemented. It may also be possible to re-use existing software, e.g. by reprogramming of the existing software or by adding new software components.

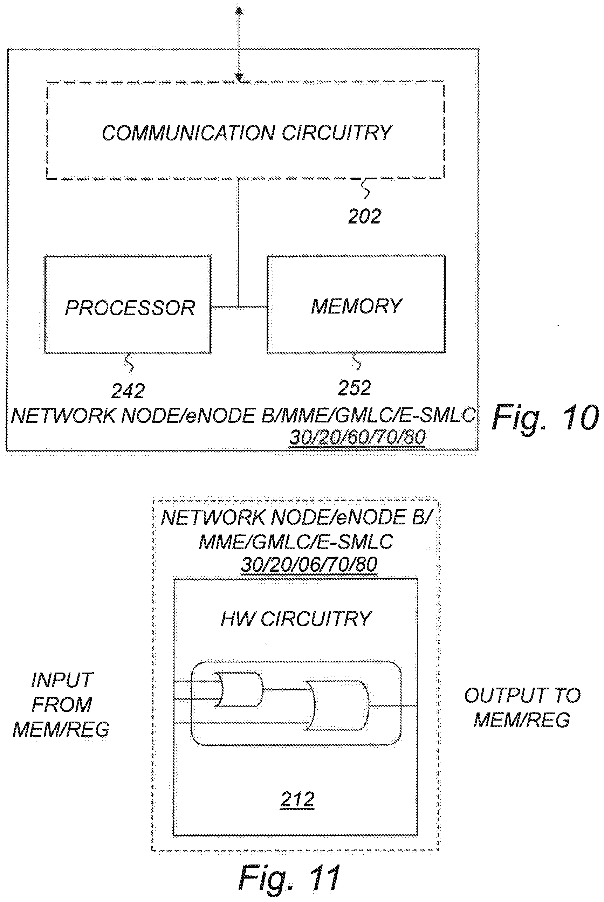

Figure 10 is a schematic block diagram illustrating an example of a network node 30, based on a processor-memory implementation according to an embodiment. In this particular example, the network node 30 comprises a processor 242 and a memory 252, the memory 252 comprising instructions executable by the processor 242.

With reference to Figure 10, the network node 30 may also include a communication circuitry 202. The communication circuitry 202 may include functions for wired and/or wireless communication with other devices and/or network nodes in the network. In a particular example, the communication circuitry 202 may be based on radio circuitry for communication with one or more other nodes, including transmitting and/or receiving information. The communication circuit 202 may be interconnected to the processor 242 and/or memory 252. By way of example, the communication circuit 202 may include any of the following: a receiver, a transmitter, a transceiver, input/output (I/O) circuitry, input port(s) and/or output port(s).

According to an aspect of the proposed technology there is provided an eNode B for communication in a cellular communication system. The eNode B is configured for initiating a collection of position-related UE information of a plurality of UEs as a response on an obtained measurement initiation request. The measurement initiation request comprises requests for the position-related UE information associated with a defined area. At least a part of the defined area is situated within a coverage area of the eNode B. The position-related UE information comprises at least a location of the UE. The eNode B is further configured for initiating forming of a measurement reply to the measurement initiation request. The measurement reply comprises a compilation of at least a part of the position-related UE information for the plurality of UEs.

Figure 10 may be seen as a schematic block diagram illustrating an example of an eNode B 20, based on a processor-memory implementation according to an embodiment. The processor 242 is then operative to initiate the collection of position-related UE information and to initiate the forming of the measurement reply.

In one embodiment, the eNode B is further configured to receive the request measurement initiation request from a MME and to transmit the measurement reply to the MME.

The communication circuit 202 is in this view operative to receive the request measurement initiation request from a MME and to transmit the measurement reply to the MME.

In one embodiment, the eNode B is further configured to perform the initiating of the collection of position-related UE information by sending measurement requests to the plurality of UEs and to perform the receiving of measurement replies from the plurality of UEs comprising the position-related UE information. Preferably, the eNode B is further configured to compile the position-related UE information received from the plurality of UEs into the compilation of at least a part of the position-related UE information.

In one embodiment, the eNode B is further configured to receive consecutive measurement replies from the plurality of UEs comprising the position-related UE information for a consecutive time instant. The eNode B is also further configured to initiate a consecutive measurement reply. The consecutive measurement reply comprises a compilation of at least a part of the position-related UE location information for the consecutive time instant for the plurality of UEs.

According to another aspect of the proposed technology there is provided a MME for communication in a cellular communication system. The MME is configured for obtaining a measurement initiation request. The measurement initiation request comprises requests for position-related UE information of a plurality of UEs associated with a defined area. The MME is further configured for initiating a forwarding of the measurement initiation request to an eNode B having a coverage area. At least a part of the defined area is situated within that coverage area. The MME is further configured for creating a compilation of UE location information for the plurality of UEs based on position-related UE information for the plurality of UEs obtained as a measurement reply of the measurement initiation request from the eNode B. The position-related UE information for the plurality of UEs comprises at least a location of the UE. The MME is further configured for initiating transmission of a compiled measurement report. The compiled measurement report comprises the compilation of UE location information for the plurality of UEs.

Figure 10 may also be seen as a schematic block diagram illustrating an example of a MME 60, based on a processor-memory implementation according to an embodiment. The processor 242 is then operative to obtain the measurement initiation request, to initiate the forwarding of the measurement initiation request, to create the compilation of UE location information and to initiate the transmission of the compiled measurement report.

In one embodiment, the MME is further configured for receiving the measurement initiation request from an E-SMLC, and the MME is further configured for transmitting the compiled measurement report to the E-SMLC.

The communication circuit 202 is in this view operative to receive the measurement initiation request and to transmit the compiled measurement report.

In one embodiment, the MME is further configured for receiving a location request from a GMLC. The MME is also further configured for forwarding the location request to an E-SMLC. The MME is moreover further configured for receiving a location reply from the E-SMLC. Finally, the MME is further configured for forwarding the location reply to the GMLC.

In one embodiment, the MME is further configured for performing the creating of the compilation of UE location information by comprising translation of UE identities from identities used for communication between the MME and the eNode B into international mobile subscriber identities and/or international mobile equipment identities.

According to another aspect of the proposed technology there is provided a GMLC for communication in a cellular communication system. The GMLC is configured for initiating transmission of a location request intended for an E-SMLC. The location request comprises requests for UE location information of a plurality of UEs associated with a defined area: The GMLC is further configured for obtaining a location reply comprising a location compilation for the plurality of UEs associated with the defined area. The location reply is created by the E-SMLC.

Figure 10 may also be seen as a schematic block diagram illustrating an example of a GMLC 70, based on a processor-memory implementation according to an embodiment. The processor 242 is then operative to initiate the transmission of a location request and to obtain the location reply comprising said location compilation.

In one embodiment, the GMLC is further configured for transmitting the location request to a MME for being forwarded to the E-SMLC. The GMLC is also further configured for receiving the location reply from the E-SMLC, forwarded by the MME.

The communication circuit 202 is in this view operative to transmit the location request and to receive the location reply comprising the location compilation.

According to another aspect of the proposed technology there is provided an E-SMLC for communication in a cellular communication system. The E-SMLC is configured for initiating a transmission of a measurement initiation request. The measurement initiation request comprises requests for position-related UE information of a plurality of UEs associated with a defined area. The E-SMLC is configured for creating a location compilation for plurality of UEs associated with a defined area, as a response of a compiled measurement report. The location compilation is based on a compilation of position-related UE location information for the plurality of UEs received in the compiled measurement report.

Figure 10 may also be seen as a schematic block diagram illustrating an example of an E-SMLC 80, based on a processor-memory implementation according to an embodiment. The processor 242 is then operative to initiate the transmission of the measurement initiation request and to create the location compilation

In one embodiment, the E-SMLC is further configured for transmitting the measurement initiation request to a MME. The E-SMLC is further configured for receiving the compiled measurement report from the MME.

The communication circuit 202 is in this view operative to transmit the measurement initiation request and to receive the compiled measurement report.

In one embodiment, the E-SMLC is further configured for receiving a location request. The E-SMLC is further configured for creating the measurement initiation request based on the received location request. The E-SMLC is also further configured for reporting the location compilation. Preferably, the E-SMLC is further configured for performing the receiving of the location request comprising receiving the location request from the MME. Also preferably, the E-SMLC is further configured for performing the reporting of the location compilation comprising reporting the location compilation to the MME.

According to another aspect of the proposed technology there is provided a cellular communication system. The cellular communication system, comprises at least one eNode B according to the description above, at least one MME according to the description above and at least one E-SMLC according to the description above. Preferably, the cellular communication system further comprises a GMLC according to the description above.

In preferred embodiments of all the apparatus and system descriptions above, the measurement initiation request comprises at least one of:
- a request for an amount of UEs in said defined area;
- a request for identities of all UEs in said defined area; and
- a request for a respective location for all active UEs in said defined area.

Furthermore, if the defined area is a defined location, the measurement initiation request comprises preferably at least one of:
- a request for an amount of UEs in said defined location; and
- a request for identities of all UEs in said defined location.

Figure 11 is a schematic block diagram illustrating another example of a network node 30, based on a hardware circuitry implementation according to an embodiment. Particular examples of suitable hardware (HW) circuitry 212 include one or more suitably configured or possibly reconfigurable electronic circuitry, e.g. Application Specific Integrated Circuits (ASICs), Field Programmable Gate Arrays (FPGAs), or any other hardware logic such as circuits based on discrete logic gates and/or flip-flops interconnected to perform specialized functions in connection with suitable registers (REG), and/or memory units (MEM).

Figure 11 may also be seen as a schematic block diagram illustrating another example of a MME 60, based on a hardware circuitry implementation according to an embodiment.

Figure 11 may also be seen as a schematic block diagram illustrating another example of a GMLC 70, based on a hardware circuitry implementation according to an embodiment.

Figure 11 may also be seen as a schematic block diagram illustrating another example of an E-SMLC 80, based on a hardware circuitry implementation according to an embodiment.

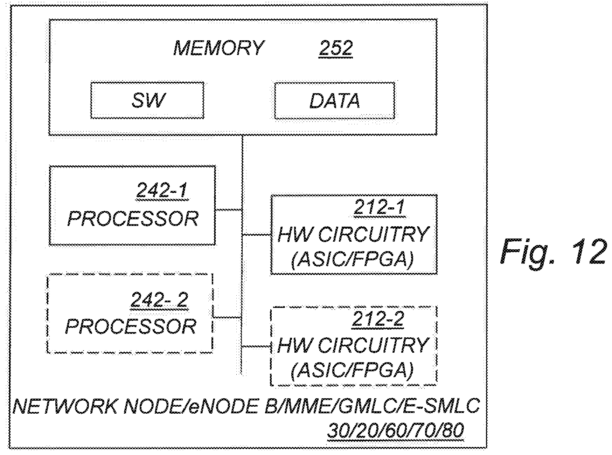

Figure 12 is a schematic block diagram illustrating yet another example of a network node 30, based on combination of both processor(s) 242-1, 242-2 and hardware circuitry 212-1, 212-2 in connection with suitable memory unit(s) 252. The network node 30 comprises one or more processors 242-1, 242-2, memory 252 including storage for software and data, and one or more units of hardware circuitry 212-1, 212-2 such as ASICs and/or FPGAs. The overall functionality is thus partitioned between programmed software (SW) for execution on one or more processors 242-1, 242-2, and one or more preconfigured or possibly reconfigurable hardware circuits 212-1, 212-2 such as ASICs and/or FPGAs. The actual hardware-software partitioning can be decided by a system designer based on a number of factors including processing speed, cost of implementation and other requirements.

Figure 12 may also be seen as a schematic block diagram illustrating yet another example of a MME 60.

Figure 12 may also be seen as a schematic block diagram illustrating yet another example of a GMLC 70.

Figure 12 may also be seen as a schematic block diagram illustrating yet another example of an E-SMLC 80.

Alternatively, or as a complement, at least some of the steps, functions, procedures, modules and/or blocks described herein may be implemented in software such as a computer program for execution by suitable processing circuitry such as one or more processors or processing units.

The flow diagram or diagrams presented herein may therefore be regarded as a computer flow diagram or diagrams, when performed by one or more processors. A corresponding apparatus may be defined as a group of function modules, where each step performed by the processor corresponds to a function module. In this case, the function modules are implemented as a computer program running on the processor.

Examples of processing circuitry includes, but is not limited to, one or more microprocessors, one or more Digital Signal Processors (DSPs), one or more Central Processing Units (CPUs), video acceleration hardware, and/or any suitable programmable logic circuitry such as one or more Field Programmable Gate Arrays (FPGAs), or one or more Programmable Logic Controllers (PLCs).

It should also be understood that it may be possible to re-use the general processing capabilities of any conventional device or unit in which the proposed technology is implemented. It may also be possible to re-use existing software, e.g. by reprogramming of the existing software or by adding new software components.

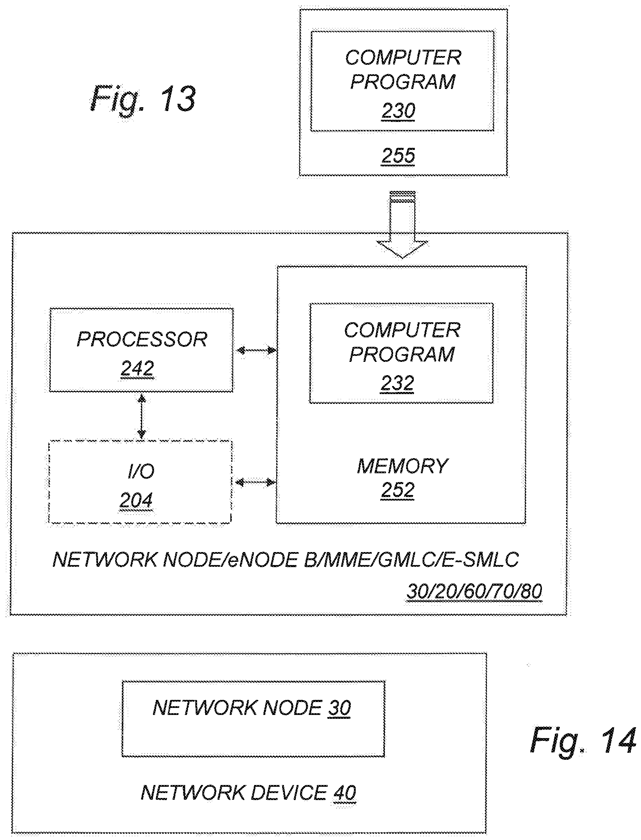

Figure 13 is a schematic diagram illustrating an embodiment of a computer-implementation of a network node 30. In this particular embodiment, at least some of the steps, functions, procedures, modules and/or blocks described herein are implemented in a computer program 232, which is loaded into the memory 252 for execution by processing circuitry including one or more processors 242. The processor(s) 242 and memory 252 are interconnected to each other to enable normal software execution. An optional input/output device 204 may also be interconnected to the processor(s) 242 and/or the memory 252 to enable input and/or output of relevant data such as input parameter(s) and/or resulting output parameter(s).

Figure 13 may also be seen as a schematic diagram illustrating an embodiment of a computer-implementation of an eNode B 20. In a particular embodiment, the computer program 232 comprises instructions, which when executed by at least one processor 242, cause the processor(s) 242 to initiate a collection of position-related UE information of a plurality of UEs as a response on an obtained measurement initiation request. The measurement initiation request comprises requests for the position-related UE information associated with a defined area. At least a part of the defined area is situated within a coverage area of an eNode B. The position-related UE information comprises at least a location of the UE. The instructions, when executed by the processor(s) 242, further cause the processor(s) 242 to initiate forming of a measurement reply to the measurement initiation request. The measurement reply comprises a compilation of at least a part of the position-related UE information for the plurality of UEs.

Figure 13 may also be seen as a schematic diagram illustrating an embodiment of a computer-implementation of a MME 60. In this particular embodiment, the computer program 232 comprises instructions, which when executed by at least one processor 242, cause the processor(s) 242 to obtain a measurement initiation request. The measurement initiation request comprises requests for position-related UE information of a plurality of UEs associated with a defined area. The instructions, when executed by the processor(s), further cause the processor(s) to initiate forwarding of the measurement initiation request to an eNode B having a coverage area. At least a part of the defined area is situated within that coverage area. The instructions, when executed by the processor(s), further cause the processor(s) to create a compilation of UE location information for the plurality of UEs based on position-related UE information for the plurality of UEs obtained as a measurement reply of the measurement initiation request from the eNode B. The position-related UE information for the plurality of UEs comprises at least a location of the UE. The instructions, when executed by the processor(s), further cause the processor(s) to initiate transmitting of a compiled measurement report. The compiled measurement report comprises the compilation of UE location information for the plurality of UEs.

Figure 13 may also be seen as a schematic diagram illustrating an embodiment of a computer-implementation of a GMLC 70. In this particular embodiment, the computer program 232 comprises instructions, which when executed by at least one processor 242, cause the processor(s) 242 to initiate transmission of a location request intended for an E-SMLC. The location request comprises requests for UE location information of a plurality of UEs associated with a defined area. The instructions, when executed by the processor(s), further cause the processor(s) to obtain a location reply comprising a location compilation for the plurality of UEs associated with the defined area. The location reply is created by the E-SMLC.

Figure 13 may also be seen as a schematic diagram illustrating an embodiment of a computer-implementation of an E-SMLC 80. In this particular embodiment, the computer program 232 comprises instructions, which when executed by at least one processor 242, cause the processor(s) 242 to initiate a transmission of a measurement initiation request. The measurement initiation request comprises requests for position-related UE information of a plurality of UEs associated with a defined area. The instructions, when executed by the processor(s), further cause the processor(s) to create a location compilation for plurality of UEs associated with a defined area, as a response of a compiled measurement report. The location compilation is based on a compilation of position-related UE location information for the plurality of UEs received in the compiled measurement report.

The term 'processor' should be interpreted in a general sense as any system or device capable of executing program code or computer program instructions to perform a particular processing, determining or computing task.

The processing circuitry including one or more processors 242 is thus configured to perform, when executing the computer program 232 well-defined processing tasks such as those described herein. The terms "processing circuitry" and "processor" will in the present disclosure be used as synonymous expressions.

The processing circuitry does not have to be dedicated to only execute the above-described steps, functions, procedure and/or blocks, but may also execute other tasks.

The proposed technology also provides a carrier comprising the computer program, wherein the carrier is one of an electronic signal, an optical signal, an electromagnetic signal, a magnetic signal, an electric signal, a radio signal, a microwave signal, or a computer-readable storage medium.

By way of example, the software or computer program 230; 232 may be realized as a computer program product, which is normally carried or stored on a computer-readable medium 255; 252 in particular a non-volatile medium. The computer-readable medium may include one or more removable or non-removable memory devices including, but not limited to a Read-Only Memory (ROM), a Random Access Memory (RAM), a Compact Disc (CD), a Digital Versatile Disc (DVD), a Blu-ray disc, a Universal Serial Bus (USB) memory, a Hard Disk Drive (HDD) storage device, a flash memory, a magnetic tape, or any other conventional memory device. The computer program may thus be loaded into the operating memory of a computer or equivalent processing device for execution by the processing circuitry thereof.

Figure 14 is a schematic block diagram illustrating an example of a network device (ND) 40 comprising a network node 30. The network node 30 can be an eNode B, a MME, a GMLC or an E-SMLC according to any of the embodiments presented further above.

According to an aspect, there is provided a network device 40 comprising an eNode B, a MME, a GMLC or an E-SMLC as described herein.

The network device may be any suitable network device in the wireless communication system, or a network device in connection with the wireless communication system. By way of example, the network device may be a suitable network node such a base station or an access point. However, the network device may alternatively be a cloud-implemented network device.

The flow diagram or diagrams presented herein may be regarded as a computer flow diagram or diagrams, when performed by one or more processors. A corresponding apparatus may be defined as a group of function modules, where each step performed by the processor corresponds to a function module. In this case, the function modules are implemented as a computer program running on the processor.

The computer program residing in memory may thus be organized as appropriate function modules configured to perform, when executed by the processor, at least part of the steps and/or tasks described herein.

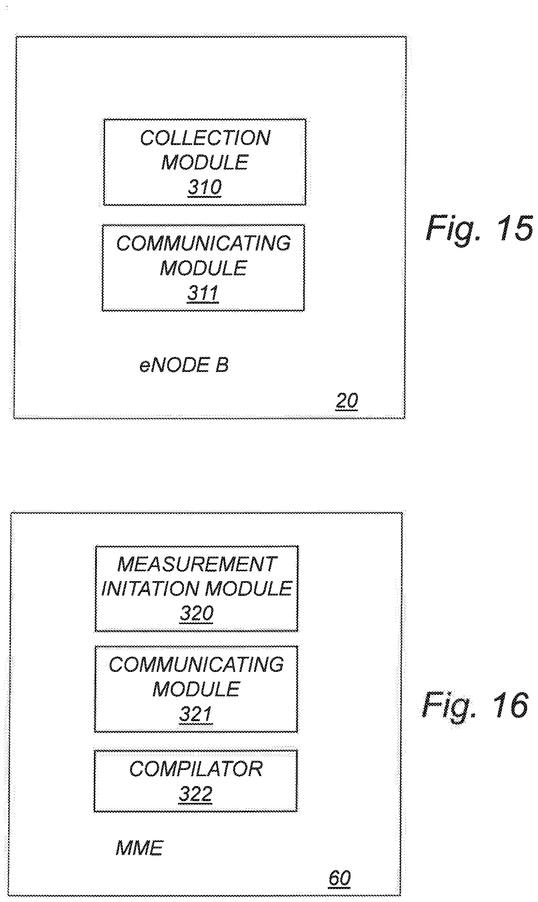

Figure 15 is a schematic diagram illustrating an example of an eNode B 20 for communication in a cellular communication system. The eNode B comprises a collection module 310 for initiating a collection of position-related UE information of a plurality of UEs as a response on an obtained measurement initiation request. The measurement initiation request comprises requests for the position-related UE information associated with a defined area. At least a part of the defined area is situated within a coverage area of the eNode B. The position-related UE information comprises at least a location of the UE. The eNode B 20 further comprises a communicating module 311 for initiating forming of a measurement reply to the measurement initiation request. The measurement reply comprises a compilation of at least a part of the position-related UE information for the plurality of UEs.

Figure 16 is a schematic diagram illustrating an example of a MME 60 for communication in a cellular communication system. The MME 60 comprises a measurement initiation module 320 for obtaining a measurement initiation request. The measurement initiation request comprises requests for position-related UE information of a plurality of UEs associated with a defined area. The MME 60 further comprises a communicating module 321 for initiating a forwarding of the measurement initiation request to an eNode B having a coverage area, within which at least a part of the defined area is situated. The MME further comprises a compilator 322 for creating a compilation of UE location information for the plurality of UEs based on position-related UE information for the plurality of UEs obtained as a measurement reply of the measurement initiation request from the eNode B. The position-related UE information for the plurality of UEs comprises at least a location of the UE. The communicating module 321 is further configured for initiating transmission of a compiled measurement report. The compiled measurement report comprising the compilation of UE location information for the plurality of UEs.

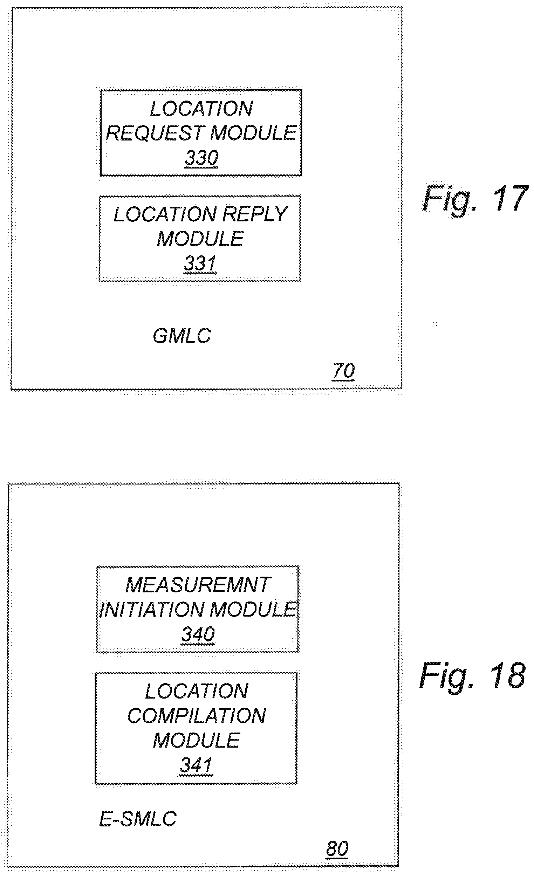

Figure 17 is a schematic diagram illustrating an example of a GMLC 70 for communication in a cellular communication system. The GMLC 70 comprises a location request module 330 for initiating transmission of a location request intended for an E-SMLC. The location request comprises requests for UE location information of a plurality of UEs associated with a defined area. The GMLC 70 further comprises a location reply module 331 for obtaining a location reply comprising a location compilation for the plurality of UEs associated with the defined area. The location reply is created by the E-SMLC.

Figure 18 is a schematic diagram illustrating an example of an E-SMLC 80 for communication in a cellular communication system. The E-SMLC 80 comprises a measurement initiation module 340 for initiating a transmission of a measurement initiation request. The measurement initiation request comprises requests for position-related UE information of a plurality of UEs associated with a defined area. The E-SMLC 80 further comprises a location compilation module 341 for creating a location compilation for plurality of UEs associated with a defined area, as a response of a compiled measurement report. The location compilation is based on a compilation of position-related UE location information for the plurality of UEs received in the compiled measurement report.

Alternatively it is possible to realize the module(s) in Figures 15-18 predominantly by hardware modules, or alternatively by hardware, with suitable interconnections between relevant modules. Particular examples include one or more suitably configured digital signal processors and other known electronic circuits, e.g. discrete logic gates interconnected to perform a specialized function, and/or Application Specific Integrated Circuits (ASICs) as previously mentioned. Other examples of usable hardware include input/output (I/O) circuitry and/or circuitry for receiving and/or sending signals. The extent of software versus hardware is purely implementation selection.

It is becoming increasingly popular to provide computing services (hardware and/or software) in network devices such as network nodes and/or servers where the resources are delivered as a service to remote locations over a network. By way of example, this means that functionality, as described herein, can be distributed or re-located to one or more separate physical nodes or servers. The functionality may be re-located or distributed to one or more jointly acting physical and/or virtual machines that can be positioned in separate physical node(s), i.e. in the so-called cloud. This is sometimes also referred to as cloud computing, which is a model for enabling ubiquitous on-demand network access to a pool of configurable computing resources such as networks, servers, storage, applications and general or customized services.

There are different forms of virtualization that can be useful in this context, including one or more of:
Consolidation of network functionality into virtualized software running on customized or generic hardware. This is sometimes referred to as network function virtualization.

Co-location of one or more application stacks, including operating system, running on separate hardware onto a single hardware platform. This is sometimes referred to as system virtualization, or platform virtualization. Co-location of hardware and/or software resources with the objective of using some advanced domain level scheduling and coordination technique to gain increased system resource utilization. This is sometimes referred to as resource virtualization, or centralized and coordinated resource pooling.

Although it may often desirable to centralize functionality in so-called generic data centres, in other scenarios it may in fact be beneficial to distribute functionality over different parts of the network.

FIG. 19 is a schematic diagram illustrating an example of how functionality can be distributed or partitioned between different Network Devices (ND) in a general case. In this example, there are at least two individual, but interconnected network devices, ND 1 and ND 2, with reference numerals 40A and 40B, respectively, which may have different functionalities, or parts of the same functionality, partitioned between the network devices 40A and 40B. There may be additional network devices, such as ND 3, with reference numeral 40C, being part of such a distributed implementation. The network devices 40A-C may be part of the same wireless communication system, or one or more of the network devices may be so-called cloud-based network devices located outside of the wireless communication system.

FIG. 20 is a schematic diagram illustrating an example of a wireless communication system, including an access network 120 and/or a core network 130 and/or an Operations and Support System (OSS), 135 in cooperation with one or more cloud-based network devices 40. Functionality relevant for the access network 120 and/or the core network 130 and/or the OSS system 135 may be at least partially implemented for execution in a cloud-based network device 40, with suitable transfer of information between the cloud-based network device and the relevant network nodes and/or communication units in the access network and/or the core network and/or the OSS system.

A Network Device (ND) may generally be seen as an electronic device being communicatively connected to other electronic devices in the network.

By way of example, the network device may be implemented in hardware, software or a combination thereof. For example, the network device may be a special-purpose network device or a general purpose network device, or a hybrid thereof.

A special-purpose network device may use custom processing circuits and a proprietary operating system (OS), for execution of software to provide one or more of the features or functions disclosed herein.

A general purpose network device may use Common Off-The-Shelf (COTS) processors and a standard OS, for execution of software configured to provide one or more of the features or functions disclosed herein.

By way of example, a special-purpose network device may include hardware comprising processing or computing resource(s), which typically include a set of one or more processors, and physical network interfaces (NIs), which sometimes are called physical ports, as well as non-transitory machine readable storage media having stored thereon software. A physical NI may be seen as hardware in a network device through which a network connection is made, e.g. wirelessly through a Wireless Network Interface Controller (WNIC) or through plugging in a cable to a physical port connected to a Network Interface Controller (NIC). During operation, the software may be executed by the hardware to instantiate a set of one or more software instance(s). Each of the software instance(s), and that part of the hardware that executes that software instance, may form a separate virtual network element.

By way of another example, a general purpose network device may for example include hardware comprising a set of one or more processor(s), often COTS processors, and network interface controller(s) (NICs), as well as non-transitory machine readable storage media having stored thereon software. During operation, the processor(s) executes the software to instantiate one or more sets of one or more applications. While one embodiment does not implement virtualization, alternative embodiments may use different forms of virtualization - for example represented by a virtualization layer and software containers. For example, one such alternative embodiment implements operating system-level virtualization, in which case the virtualization layer represents the kernel of an operating system (or a shim executing on a base operating system) that allows for the creation of multiple software containers that may each be used to execute one of a sets of applications. In an example embodiment, each of the software containers (also called virtualization engines, virtual private servers, or jails) is a user space instance (typically a virtual memory space). These user space instances may be separate from each other and separate from the kernel space in which the operating system is executed; the set of applications running in a given user space, unless explicitly allowed, cannot access the memory of the other processes. Another such alternative embodiment implements full virtualization, in which case: 1) the virtualization layer represents a hypervisor (sometimes referred to as a Virtual Machine Monitor (VMM)) or the hypervisor is executed on top of a host operating system; and 2) the software containers each represent a tightly isolated form of software container called a virtual machine that is executed by the hypervisor and may include a guest operating system.

A hypervisor is the software/hardware that is responsible for creating and managing the various virtualized instances and in some cases the actual physical hardware. The hypervisor manages the underlying resources and presents them as virtualized instances. What the hypervisor virtualizes to appear as a single processor may actually comprise multiple separate processors. From the perspective of the operating system, the virtualized instances appear to be actual hardware components.

A virtual machine is a software implementation of a physical machine that runs programs as if they were executing on a physical, non-virtualized machine; and applications generally do not know they are running on a virtual machine as opposed to running on a "bare metal" host electronic device, though some systems provide para-virtualization which allows an operating system or application to be aware of the presence of virtualization for optimization purposes.

The instantiation of the one or more sets of one or more applications as well as the virtualization layer and software containers if implemented, are collectively referred to as software instance(s). Each set of applications, corresponding software container if implemented, and that part of the hardware that executes them (be it hardware dedicated to that execution and/or time slices of hardware temporally shared by software containers), forms a separate virtual network element(s).

The virtual network element(s) (VNEs) may perform similar functionality compared to physical network element(s). This virtualization of the hardware is sometimes referred to as Network Function Virtualization (NFV). Thus, NFV may be used to consolidate many network equipment types onto industry standard high volume server hardware, physical switches, and physical storage, which could be located in data centres, NDs, and Customer Premise Equipment (CPE). However, different embodiments may implement one or more of the software container(s) differently. For example, while embodiments are illustrated with each software container corresponding to a VNE, alternative embodiments may implement this correspondence or mapping between software container-VNE at a finer granularity level; it should be understood that the techniques described herein with reference to a correspondence of software containers to VNEs also apply to embodiments where such a finer level of granularity is used.

According to yet another embodiment, there is provided a hybrid network device, which includes both custom processing circuitry/proprietary OS and COTS processors/standard OS in a network device, e.g. in a card or circuit board within a ND. In certain embodiments of such a hybrid network device, a platform Virtual Machine (VM), such as a VM that implements functionality of a special-purpose network device, could provide for para-virtualization to the hardware present in the hybrid network device.

As can be understood from the above description, the technology is intended to expand the existing configuration of messages used for positioning to facilitate simultaneous reporting of the IDs of several UEs in a specified location or the amount of UEs in a specified location or the location of several UEs.

The embodiments described above are merely given as examples, and it should be understood that the proposed technology is not limited thereto. It will be understood by those skilled in the art that various modifications, combinations and changes may be made to the embodiments without departing from the present scope as defined by the appended claims. In particular, different part solutions in the different embodiments can be combined in other configurations, where technically possible.

### ABBREVIATIONS

- AoA: Angle of Arrival
- ASIC: Application Specific Integrated Circuits
- BTS: Base Transceiver Stations
- CD: Compact Disc
- COTS: Common Off-The-Shelf
- CPE: Customer Premises Equipment
- CPU: Central Processing Units
- DL: DownLink
- DSP: Digital Signal Processors
- DVD: Digital Versatile Disc
- ECGI: Eutra Cell Global Identity
- E-CID: Enhanced Cell Id
- ELP: Evolved Packet Core Location Services Protocol
- eNB: evolved Node B
- E-SMLC: Evolved-Serving Mobile Location Centre
- FPGA: Field Programmable Gate Arrays
- GMLC: Gateway Mobile Location Centre
- GNSS: Global Navigation Satellite System
- HDD: Hard Disk Drive
- HW: hardware
- IE: Information Element
- I/O: input/output
- IRAT: Inter Radio Access Technology
- LCS-AP: Location Services Application Protocol
- LEE: Laptop Embedded Equipment
- LME: Laptop Mounted Equipment
- LPP: LTE Positioning Protocol
- LPPa: LTE Positioning Protocol appendix
- LTE: Long-Term Evolution
- MEM: memory units
- MME: Mobility Management Entity
- NB: Node B
- ND: Network Device
- NFV: Network Function Virtualization
- NI: Network Interfaces
- NIC: Network Interface Controller
- OS: Operating System
- OSS: Operations and Support System
- OTDOA: Observed Time Difference of Arrival
- PC: Personal Computer
- PDA: Personal Digital Assistant
- PLC: Programmable Logic Controllers
- RAM: Random Access Memory
- REG: registers
- ROM: Read-Only Memory
- RRC: Radio Resource Control
- RRU: Remote Radio Units
- RSRP: Reference Signal Received Power
- RSRQ: Reference Signal Received Quality
- SMLC: Serving Mobile Location Centre
- STA: Station
- SW: SoftWare
- TA: Timing Advance
- TAAA: Timing Advance and Angle of Arrival
- UE: User Equipment
- UL: UpLink
- USB: Universal Serial Bus
- UTDOA: Uplink Time Difference of Arrival
- VM: Virtual Machine
- VMM: Virtual Machine Monitor
- VNE: Virtual Network Element
- WNIC: Wireless Network Interface Controller

## Claims

1. A method for assisting positioning of user equipment in a telecommunication system, wherein said method comprises the steps of:
- initiating (S20), in a network node (30), a collection of position-related user equipment information of a plurality of user equipment (10) in response to an obtained measurement initiation request;
wherein said measurement initiation request comprises requests for said position-related user equipment information associated with a defined area, of which at least a part is situated within a coverage area of said network node (30);
wherein said position-related user equipment information comprises at least a location of said user equipment (10);
- initiating (S40), in said network node (30), forming of a measurement reply to said measurement initiation request, wherein said measurement reply comprises a compilation of at least a part of said position-related user equipment information for said plurality of user equipment (10).

2. The method according to claim 1, **characterised in that** said network node is an eNode B (20).

3. The method according to claim 1 or 2, **characterised by** the further steps of:
- receiving (S10) said measurement initiation request from a mobility management entity (60); and
- transmitting (S41) said measurement reply to said mobility management entity (60).

4. The method according to any of the claims 1 to 3, **characterised in that** said measurement initiation request comprises at least one of:
- a request for an amount of user equipment (10) in said defined area;
- a request for identities of all user equipment (10) in said defined area; and
- a request for a respective location for all active user equipment (10) in said defined area.

5. The method according to any of the claims 1 to 3, **characterised in that** said defined area is a defined location, and **in that** said measurement initiation request comprises at least one of:
- a request for an amount of user equipment (10) in said defined location; and
- a request for identities of all user equipment (10) in said defined location.

6. The method according to any of the claims 1 to 5, **characterised in that** said step of initiating (S20) said collection of position-related user equipment information comprises sending (S21) of measurement requests to said plurality of user equipment (10) and receiving (S22) measurement reports from said plurality of user equipment (10) comprising said position-related user equipment information.

7. A method for assisting positioning of user equipment in a telecommunication system, wherein said method comprises the steps of:
- obtaining (S130), in a mobility management entity (60), a measurement initiation request;
wherein said measurement initiation request comprises requests for position-related user equipment information of a plurality of user equipment (10) associated with a defined area;
- initiating (S140), in said mobility management entity (60), forwarding of said measurement initiation request to a network node (30), preferably an eNode B (20), having a coverage area, within which at least a part of said defined area is situated;
- creating (S160), in said mobility management entity (60), a compilation of user equipment location information for said plurality of user equipment (10) based on position-related user equipment information for said plurality of user equipment (10) obtained as a measurement reply of said measurement initiation request from said network node (30);
wherein said position-related user equipment information for said plurality of user equipment (10) comprises at least a location of said user equipment (10); and
- initiating (S170), in said mobility management entity (60), transmitting of a compiled measurement report, said compiled measurement report comprising said compilation of user equipment location information for said plurality of user equipment (10).

8. A method for assisting positioning of user equipment in a telecommunication system, wherein said method comprises the steps of:
- initiating (S210), in a gateway mobile location centre (70), transmission of a location request intended for an evolved serving mobile location centre (80);
wherein said location request comprises requests for user equipment location information of a plurality of user equipment (10) associated with a defined area; and
- obtaining (S220), in said gateway mobile location centre (70), a location reply comprising a location compilation for said plurality of user equipment (10) associated with said defined area, said location reply being created by said evolved serving mobile location centre (80).

9. A method for positioning of user equipment in a telecommunication system, wherein said method comprises the steps of:
- initiating (S330), in an evolved serving mobile location centre (80), a transmission of a measurement initiation request;
wherein said measurement initiation request comprises requests for position-related user equipment information of a plurality of user equipment (10) associated with a defined area; and
- creating (S350), in said evolved serving mobile location centre (80), a location compilation for plurality of user equipment associated with a defined area, as a response of a compiled measurement report, said location compilation being based on a compilation of position-related user equipment location information for said plurality of user equipment (10) received in said compiled measurement report.

10. A network node (30) for communication in a cellular communication system,
said network node (30) being configured for initiating a collection of position-related user equipment information of a plurality of user equipment (10) as a response on an obtained measurement initiation request;
wherein said measurement initiation request comprises requests for said position-related user equipment information associated with a defined area, of which at least a part is situated within a coverage area of said network node (30);
wherein said position-related user equipment information comprises at least a location of said user equipment (10); and
said network node (30) being further configured for initiating forming of a measurement reply to said measurement initiation request;
wherein said measurement reply comprises a compilation of at least a part of said position-related user equipment information for said plurality of user equipment (10).

11. A mobility management entity (60) for communication in a cellular communication system,
said mobility management entity (60) being configured for obtaining a measurement initiation request;
wherein said measurement initiation request comprises requests for position-related user equipment information of a plurality of user equipment (10) associated with a defined area;
said mobility management entity (60) being further configured for initiating a forwarding of said measurement initiation request to a network node (30), preferably an eNode B (20), having a coverage area, within which at least a part of said defined area is situated;
said mobility management entity (60) being further configured for creating a compilation of user equipment location information for said plurality of user equipment (10) based on position-related user equipment information for said plurality of user equipment (10) obtained as a measurement reply of said measurement initiation request from said network node (30);
wherein said position-related user equipment information for said plurality of user equipment (10) comprises at least a location of said user equipment (10); and
said mobility management entity (60) being further configured for initiating transmission of a compiled measurement report, said compiled measurement report comprising said compilation of user equipment location information for said plurality of user equipment (10).

12. A gateway mobile location centre (70) for communication in a cellular communication system,
said gateway mobile location centre (70) being configured for initiating transmission of a location request intended for an evolved serving mobile location centre (80);
wherein said location request comprises requests for user equipment location information of a plurality of user equipment (10) associated with a defined area; and
said gateway mobile location centre (70) being further configured for obtaining a location reply comprising a location compilation for said plurality of user equipment (10) associated with said defined area, said location reply being created by said evolved serving mobile location centre (80).

13. An evolved serving mobile location centre (80) for communication in a cellular communication system,
said evolved serving mobile location centre (80) being configured for initiating a transmission of a measurement initiation request;
wherein said measurement initiation request comprises requests for position-related user equipment information of a plurality of user equipment (10) associated with a defined area; and
said evolved serving mobile location centre (80) being configured for creating a location compilation for plurality of user equipment (10) associated with a defined area, as a response of a compiled measurement report, said location compilation being based on a compilation of position-related user equipment location information for said plurality of user equipment (10) received in said compiled measurement report.

14. A computer program (230; 232) comprising instructions, which when executed by at least one processor (242), cause the at least one processor (242) to initiate a collection of position-related user equipment information of a plurality of user equipment (10) as a response on an obtained measurement initiation request;
wherein said measurement initiation request comprises requests for said position-related user equipment information associated with a defined area, of which at least a part is situated within a coverage area of a network node (30);
wherein said position-related user equipment information comprises at least a location of said user equipment (10);
said instructions, when executed by said at least one processor (242), further cause the at least one processor (242) to initiate forming of a measurement reply to said measurement initiation request, wherein said measurement reply comprises a compilation of at least a part of said position-related user equipment information for said plurality of user equipment (10).

15. A computer-program product comprising a computer-readable medium (255) having stored thereon the computer program (230; 232) of claim 14.

## Patentansprüche

1. Verfahren zum Unterstützen der Positionierung von Benutzerausrüstung in einem Telekommunikationssystem, wobei das Verfahren die folgenden Schritte umfasst:
- Initiieren (S20), in einem Netzwerkknoten (30), einer Sammlung von positionsbezogenen Benutzerausrüstungsinformationen einer Vielzahl von Benutzerausrüstung (10) als Reaktion auf eine erhaltene Messinitiierungsanforderung;
wobei die Messungsinitiierungsanfrage Anforderungen für die positionsbezogenen Benutzerausrüstungsinformationen, die einem definierten Bereich zugeordnet sind, umfasst, von dem mindestens ein Teil innerhalb eines Abdeckungsbereichs des Netzwerkknotens (30) angeordnet ist;
wobei die positionsbezogene Benutzerausrüstungsinformation mindestens einen Standort der Benutzerausrüstung (10) umfasst;
- Initiieren (S40), in dem Netzwerkknoten (30), der Bildung einer Messungsantwort auf die Messungsinitiierungsanforderung, wobei die Messungsantwort eine Kompilierung von mindestens einem Teil der positionsbezogenen Benutzerausrüstungsinformationen der Vielzahl von Benutzerausrüstungen (10) umfasst.

2. Verfahren nach Anspruch 1, **dadurch gekennzeichnet, dass** der Netzwerkknoten ein eNode B (20) ist.

3. Verfahren nach Anspruch 1 oder 2, **gekennzeichnet durch** die weiteren Schritte:
- Empfangen (S10) der Messungsinitiierungsanforderung von einer Mobilitätsverwaltungsentität (60); und
- Übertragen (S41) der Messungsantwort zu der Mobilitätsverwaltungsentität (60).

4. Verfahren nach einem der Ansprüche 1 bis 3, **dadurch gekennzeichnet, dass** die Messungsinitiierungsanforderung mindestens eines von Folgendem umfasst:
- eine Anforderung nach einer Menge an Benutzerausrüstung (10) in dem definierten Bereich;
- eine Anforderung nach Identitäten aller Benutzerausrüstung (10) in dem definierten Bereich; und
- eine Anforderung nach einem jeweiligen Standort für alle aktive Benutzerausrüstung (10) in dem definierten Bereich.

5. Verfahren nach einem der Ansprüche 1 bis 3, **dadurch gekennzeichnet, dass** der definierte Bereich ein definierter Standort ist, und dadurch, dass die Messungsinitiierungsanforderung mindestens eines von Folgendem umfasst:
- eine Anforderung nach einer Menge an Benutzerausrüstung (10) in dem definierten Standort; und
- eine Anforderung nach Identitäten aller Benutzerausrüstung (10) in dem definierten Standort.

6. Verfahren nach einem der Ansprüche 1 bis 5, **dadurch gekennzeichnet, dass** der Schritt des Initiierens (S20) der Sammlung von positionsbezogenen Benutzerausrüstungsinformationen das Senden (S21) von Messungsanforderungen an die Vielzahl von Benutzerausrüstungen (10) und Empfangen (S22) von Messberichten von der Vielzahl von Benutzerausrüstung (10), umfassend die positionsbezogenen Benutzergeräteinformationen, umfasst.

7. Verfahren zum Unterstützen der Positionierung von Benutzerausrüstung in einem Telekommunikationssystem, wobei das Verfahren die folgenden Schritte umfasst:
- Erhalten (S130), in einer Mobilitätsverwaltungsentität (60), einer Messungsinitiierungsanforderung;
wobei die Messungsinitiierungsanforderung Anforderungen nach positionsbezogenen Benutzerausrüstungsinformationen einer Vielzahl von Benutzerausrüstungen (10) umfasst, die einem definierten Bereich zugeordnet ist;
- Initiieren (S140), in der Mobilitätsverwaltungseinheit (60), der Weiterleitung der Messungsinitiierungsanforderung an einen Netzwerkknoten (30), vorzugsweise einen eNode B (20), aufweisend einen Abdeckbereich, innerhalb dessen mindestens ein Teil des definierten Bereichs angeordnet ist;
- Erstellen (S160), in der Mobilitätsverwaltungseinheit (60), einer Kompilierung von Benutzerausrüstungs-Standortinformationen für die Vielzahl von Benutzerausrüstungen (10) basierend auf positionsbezogenen Benutzerausrüstungsinformationen für die Vielzahl von Benutzerausrüstungen (10), erhalten als eine Messungsantwort der Messungsinitiierungsanforderung von dem Netzwerkknoten (30);
wobei die positionsbezogenen Benutzerausrüstungsinformationen für die Vielzahl von Benutzerausrüstungen (10) mindestens einen Standort der Benutzerausrüstung (10) umfassen; und
- Initiieren (S170), in der Mobilitätsverwaltungsentität (60), der Übertragung eines kompilierten Messberichts, wobei der kompilierte Messbericht die Kompilierung von Benutzerausrüstungs-Standortinformationen für die Vielzahl von Benutzerausrüstungen (10) umfasst.

8. Verfahren zum Unterstützen der Positionierung von Benutzerausrüstung in einem Telekommunikationssystem, wobei das Verfahren die folgenden Schritte umfasst:
- Initiieren (S210), in einer mobilen Gateway-Standortzentrale (70), der Übertragung einer Standortanforderung, die für eine entwickelte bedienende mobile Standortzentrale (80) bestimmt ist;
wobei die Standortanforderung Anforderungen nach Benutzerausrüstungs-Standortinformationen einer Vielzahl von Benutzerausrüstungen (10) umfasst, die einem definierten Bereich zugeordnet ist; und
- Erhalten (S220), in der mobilen Gateway-Standortzentrale (70), einer Standortantwort, umfassend eine Standortkompilierung für die Vielzahl von Benutzerausrüstungen (10), die dem definierten Bereich zugeordnet ist, wobei die Standortantwort von der weiterentwickelten bedienenden mobilen Standortzentrale (80) erstellt wird.

9. Verfahren zum Positionieren von Benutzerausrüstung in einem Telekommunikationssystem, wobei das Verfahren die folgenden Schritte umfasst:
- Initiieren (S330), in einer entwickelten bedienenden mobilen Standortzentrale (80), einer Übertragung einer Messungsinitiierungsanforderung;
wobei die Messungsinitiierungsanforderung Anforderungen nach positionsbezogenen Benutzerausrüstungsinformationen einer Vielzahl von Benutzerausrüstungen (10) umfasst, die einem definierten Bereich zugeordnet ist; und
- Erstellen (S350), in der entwickelten bedienenden mobilen Standortzentrale (80), einer Standortkompilierung für eine Vielzahl von Benutzerausrüstungen, die einem definierten Bereich zugeordnet ist, wobei die Standortkompilierung auf einer Kompilierung positionsbezogener Benutzerausrüstungs-Standortinformationen für die Vielzahl von Benutzerausrüstungen (10) basiert, die in dem kompilierten Messbericht empfangen werden.

10. Netzwerkknoten (30) für die Kommunikation in einem Mobilkommunikationssystem, wobei der Netzwerkknoten (30) konfiguriert ist zum Initiieren einer Sammlung von positionsbezogenen Benutzerausrüstungsinformationen einer Vielzahl von Benutzerausrüstungen (10) als Antwort auf eine erhaltene Messungsinitiierungsanforderung;
wobei die Messungsinitiierungsanfrage Anforderungen für die positionsbezogenen Benutzerausrüstungsinformationen, die einem definierten Bereich zugeordnet sind, umfasst, von dem mindestens ein Teil innerhalb eines Abdeckungsbereichs des Netzwerkknotens (30) angeordnet ist;
wobei die positionsbezogene Benutzerausrüstungsinformation mindestens einen Standort der Benutzerausrüstung (10) umfasst;
der Netzwerkknoten (30) weiter zum Initiieren der Bildung einer Messungsantwort auf die Messungsinitiierungsanforderung konfiguriert ist;
wobei die Messungsantwort eine Kompilierung von mindestens einem Teil der positionsbezogenen Benutzerausrüstungsinformationen für die Vielzahl von Benutzerausrüstungen (10) umfasst.

11. Mobilitätsverwaltungsentität (60) für die Kommunikation in einem Mobilkommunikationssystem,
wobei die Mobilitätsverwaltungsentität (60) konfiguriert ist zum Erhalten einer Messungsinitiierungsanforderung;
wobei die Messungsinitiierungsanforderung Anforderungen nach positionsbezogenen Benutzerausrüstungsinformationen einer Vielzahl von Benutzerausrüstungen (10) umfasst, die einem definierten Bereich zugeordnet ist;
wobei die Mobilitätsverwaltungsentität (60) weiter konfiguriert ist zum Initiieren der Weiterleitung der Messungsinitiierungsanforderung an einen Netzwerkknoten (30), vorzugsweise einen eNode B (20), aufweisend einen Abdeckbereich, innerhalb dessen mindestens ein Teil des definierten Bereichs angeordnet ist;
wobei die Mobilitätsverwaltungsentität (60) weiter konfiguriert ist zum Erstellen einer Kompilierung von Benutzerausrüstungs-Standortinformationen für die Vielzahl von Benutzerausrüstungen (10) basierend auf positionsbezogenen Benutzerausrüstungsinformationen für die Vielzahl von Benutzerausrüstungen (10), erhalten als eine Messungsantwort der Messungsinitiierungsanforderung von dem Netzwerkknoten (30);
wobei die positionsbezogenen Benutzerausrüstungsinformationen für die Vielzahl von Benutzerausrüstungen (10) mindestens einen Standort der Benutzerausrüstung (10) umfassen; und
wobei die Mobilitätsverwaltungsentität (60) weiter konfiguriert ist zum Initiieren der Übertragung eines kompilierten Messberichts, wobei der kompilierte Messbericht die Kompilierung von Benutzerausrüstungs-Standortinformationen für die Vielzahl von Benutzerausrüstungen (10) umfasst.

12. Mobile Gateway-Standortzentrale (70) für die Kommunikation in einem Mobilkommunikationssystem,
wobei die mobile Gateway-Standortzentrale (70) konfiguriert ist zum Initiieren der Übertragung einer Standortanforderung, die für eine entwickelte bedienende mobile Standortzentrale (80) bestimmt ist;
wobei die Standortanforderung Anforderungen nach Benutzerausrüstungs-Standortinformationen einer Vielzahl von Benutzerausrüstungen (10) umfasst, die einem definierten Bereich zugeordnet ist; und
wobei die mobile Gateway-Standortzentrale (70) weiter konfiguriert ist zum Erhalten einer Standortantwort, umfassend eine Standortkompilierung für die Vielzahl von Benutzerausrüstungen (10), die dem definierten Bereich zugeordnet ist, wobei die Standortantwort von der weiterentwickelten bedienenden mobilen Standortzentrale (80) erstellt wird.

13. Entwickelte bedienende mobile Standortzentrale (80) für die Kommunikation in einem Mobilkommunikationssystem,
wobei die entwickelte bedienende mobile Standortzentrale (80) konfiguriert ist zum Initiieren einer Übertragung einer Messungsinitiierungsanforderung;
wobei die Messungsinitiierungsanforderung Anforderungen nach positionsbezogenen Benutzerausrüstungsinformationen einer Vielzahl von Benutzerausrüstungen (10) umfasst, die einem definierten Bereich zugeordnet ist; und
wobei die entwickelte bedienende mobile Standortzentrale (80) weiter konfiguriert ist zum Erstellen einer Standortkompilierung für eine Vielzahl von Benutzerausrüstungen (10), die einem definierten Bereich zugeordnet ist, wobei die Standortkompilierung auf einer Kompilierung positionsbezogener Benutzerausrüstungs-Standortinformationen für die Vielzahl von Benutzerausrüstungen (10) basiert, die in dem kompilierten Messbericht empfangen werden.

14. Computerprogramm (230; 232), umfassend Anweisungen, die, wenn sie von mindestens einem Prozessor (242) ausgeführt werden, den mindestens einen Prozessor (242) dazu veranlassen, eine Sammlung von positionsbezogenen Benutzerausrüstungsinformationen einer Vielzahl von Benutzerausrüstungen (10) als Antwort auf eine erhaltene Messungsinitiierungsanforderung zu initiieren;
wobei die Messinitiierungsanfrage Anforderungen für die positionsbezogenen Benutzerausrüstungsinformationen, die einem definierten Bereich zugeordnet sind, umfasst, von dem mindestens ein Teil innerhalb eines Abdeckungsbereichs eines Netzwerkknotens (30) angeordnet ist;
wobei die positionsbezogene Benutzerausrüstungsinformation mindestens einen Standort der Benutzerausrüstung (10) umfasst;
die Befehle, wenn sie von dem mindestens einen Prozessor (242) ausgeführt werden, weiter den mindestens einen Prozessor (242) dazu veranlassen, das Bilden einer Messungsantwort auf die Messungsinitiierungsanforderung zu initiieren, wobei die Messungsantwort eine Kompilierung von mindestens einem Teil der positionsbezogenen Benutzerausrüstungsinformationen für die Vielzahl von Benutzerausrüstungen (10) umfasst.

15. Computerprogrammprodukt, umfassend ein computerlesbares Medium (255) mit dem darauf gespeicherten Computerprogramm (230; 232) von Anspruch 14.

## Revendications

1. Procédé d'assistance au positionnement de l'équipement d'utilisateur dans un système de télécommunication, dans lequel ledit procédé comprend les étapes de :
- initiation (S20), dans un nœud de réseau (30), d'une collecte d'informations d'équipement d'utilisateur liées à la position d'une pluralité d'équipement d'utilisateur (10) en réponse à une requête d'initiation de mesure obtenue ;
dans lequel ladite requête d'initiation de mesure comprend des requêtes pour lesdites informations d'équipement d'utilisateur liées à la position associées à une zone définie, dont au moins une partie est située dans une zone de couverture dudit nœud de réseau (30) ;
dans lequel lesdites informations d'équipement d'utilisateur liées à la position comprennent au moins un emplacement dudit équipement d'utilisateur (10) ;
- initiation (S40), dans ledit nœud de réseau (30), de la formation d'une réponse de mesure à ladite requête d'initiation de mesure, dans lequel ladite réponse de mesure comprend une compilation d'au moins une partie desdites informations d'équipement d'utilisateur liées à la position pour ladite pluralité d'équipement d'utilisateur (10).

2. Procédé selon la revendication 1, **caractérisé en ce que** ledit nœud de réseau est un eNode B (20).

3. Procédé selon la revendication 1 ou 2, **caractérisé par** les autres étapes de :
- réception (S10) de ladite requête d'initiation de mesure par une entité de gestion de mobilité (60) ; et
- transmission (S41) de ladite réponse de mesure à ladite entité de gestion de mobilité (60).

4. Procédé selon l'une quelconque des revendications 1 à 3, **caractérisé en ce que** ladite requête d'initiation de mesure comprend au moins une de :
- une requête pour une quantité d'équipement d'utilisateur (10) dans ladite zone définie ;
- une requête pour des identités de tout équipement d'utilisateur (10) dans ladite zone définie ; et
- une requête pour un emplacement respectif pour tout équipement d'utilisateur actif (10) dans ladite zone définie.

5. Procédé selon l'une quelconque des revendications 1 à 3, **caractérisé en ce que** ladite zone définie est un emplacement défini, et **en ce que** ladite requête d'initiation de mesure comprend au moins une de :
- une requête pour une quantité d'équipement d'utilisateur (10) dans ledit emplacement défini ; et
- une requête pour des identités de tout équipement d'utilisateur (10) dans ledit emplacement défini.

6. Procédé selon l'une quelconque des revendications 1 à 5, **caractérisé en ce que** ladite étape d'initiation (S20) de ladite collecte d'informations d'équipement d'utilisateur liées à la position comprend l'envoi (S21) de requêtes de mesure à ladite pluralité d'équipement d'utilisateur (10) et la réception (S22) de rapports de mesure de ladite pluralité d'équipement d'utilisateur (10) comprenant lesdites informations d'équipement utilisateur liées à la position.

7. Procédé d'assistance au positionnement de l'équipement d'utilisateur dans un système de télécommunication, dans lequel ledit procédé comprend les étapes de :
- obtention (S130), dans une entité de gestion de mobilité (60), d'une requête d'initiation de mesure ;
dans laquelle ladite requête d'initiation de mesure comprend des requêtes pour des informations d'équipement d'utilisateur liées à la position d'une pluralité d'équipement d'utilisateur (10) associé à une zone définie ;
- initiation (S140), dans ladite entité de gestion de mobilité (60), du renvoi de ladite requête d'initiation de mesure à un nœud de réseau (30), de préférence un eNode B (20), présentant une zone de couverture, dans laquelle au moins une partie de ladite zone définie est située ;
- création (S160), dans ladite entité de gestion de mobilité (60), d'une compilation des informations d'emplacement d'équipement d'utilisateur pour ladite pluralité d'équipement d'utilisateur (10) sur la base des informations d'équipement d'utilisateur liées à la position pour ladite pluralité d'équipement d'utilisateur (10) obtenue comme une réponse de mesure de ladite requête d'initiation de mesure par ledit nœud de réseau (30) ;
dans laquelle lesdites informations d'équipement d'utilisateur liées à la position pour ladite pluralité d'équipement d'utilisateur (10) comprennent au moins un emplacement dudit équipement d'utilisateur (10) ; et
- initiation (S170), dans ladite entité de gestion de mobilité (60), de la transmission d'un rapport de mesure compilé, ledit rapport de mesure compilé comprenant ladite compilation des informations d'emplacement d'équipement d'utilisateur pour ladite pluralité d'équipement d'utilisateur (10).

8. Procédé d'assistance au positionnement de l'équipement d'utilisateur dans un système de télécommunication, dans lequel ledit procédé comprend les étapes de :
- initiation (S210), dans un centre d'emplacement mobile de passerelle (70), de la transmission d'une requête d'emplacement destinée à un centre d'emplacement mobile de service évolué (80) ;
dans lequel ladite requête d'emplacement comprend des requêtes pour des informations d'emplacement d'équipement d'utilisateur d'une pluralité d'équipement d'utilisateur (10) associé à une zone définie ; et
- obtention (S220), dans ledit centre d'emplacement mobile de passerelle (70), d'une réponse d'emplacement comprenant une compilation d'emplacement pour ladite pluralité d'équipement d'utilisateur (10) associé à ladite zone définie, ladite réponse d'emplacement étant créée par ledit centre d'emplacement mobile de service évolué (80).

9. Procédé de positionnement d'équipement d'utilisateur dans un système de télécommunications, dans lequel ledit procédé comprend les étapes de :
- initiation (S330), dans un centre d'emplacement mobile de service évolué (80), d'une transmission d'une requête d'initiation de mesure ;
dans lequel ladite requête d'initiation de mesure comprend des requêtes pour des informations d'équipement d'utilisateur liées à la position d'une pluralité d'équipement d'utilisateur (10) associé à une zone définie ; et
- création (S350), dans ledit centre d'emplacement mobile de service évolué (80), d'une compilation d'emplacement pour une pluralité d'équipement d'utilisateur associé à une zone définie, comme une réponse d'un rapport de mesure compilée, ladite compilation d'emplacement étant basée sur une compilation d'informations d'emplacement d'équipement d'utilisateur liées à la position pour ladite pluralité d'équipement d'utilisateur (10) reçu dans ledit rapport de mesure compilée.

10. Nœud de réseau (30) pour la communication dans un système de communication cellulaire,
ledit nœud de réseau (30) étant configuré pour initier une collecte d'informations d'équipement d'utilisateur liées à la position d'une pluralité d'équipement d'utilisateur (10) comme une réponse sur une requête d'initiation de mesure obtenue ;
dans lequel ladite requête d'initiation de mesure comprend des requêtes pour lesdites informations d'équipement d'utilisateur liées à la position associées à une zone définie, dont au moins une partie est située dans une zone de couverture dudit nœud de réseau (30) ;
dans lequel lesdites informations d'équipement d'utilisateur liées à la position comprennent au moins un emplacement dudit équipement d'utilisateur (10) ; et
ledit nœud de réseau (30) étant en outre configuré pour initier la formation d'une réponse de mesure à ladite requête d'initiation de mesure ;
dans lequel ladite réponse de mesure comprend une compilation d'au moins une partie desdites informations d'équipement d'utilisateur liées à la position pour ladite pluralité d'équipement d'utilisateur (10).

11. Entité de gestion de mobilité (60) pour la communication dans un système de communication cellulaire,
ladite entité de gestion de mobilité (60) étant configurée pour obtenir une requête d'initiation de mesure ;
dans laquelle ladite requête d'initiation de mesure comprend des requêtes pour des informations d'équipement d'utilisateur liées à la position d'une pluralité d'équipement d'utilisateur (10) associé à une zone définie ;
ladite entité de gestion de mobilité (60) étant en outre configurée pour initier un renvoi de ladite requête d'initiation de mesure à un nœud de réseau (30), de préférence un eNode B (20), présentant une zone de couverture, dans laquelle au moins une partie de ladite zone définie est située ;
ladite entité de gestion de mobilité (60) étant en outre configurée pour créer une compilation d'informations d'emplacement d'équipement d'utilisateur pour ladite pluralité d'équipement d'utilisateur (10) sur la base d'informations d'équipement d'utilisateur liées à la position pour ladite pluralité d'équipement d'utilisateur (10) obtenu comme une réponse de mesure de ladite requête d'initiation de mesure par ledit nœud de réseau (30) ;
dans laquelle lesdites informations d'équipement d'utilisateur liées à la position pour ladite pluralité d'équipement d'utilisateur (10) comprennent au moins un emplacement dudit équipement d'utilisateur (10) ; et
ladite entité de gestion de mobilité (60) étant en outre configurée pour initier la transmission d'un rapport de mesure compilée, ledit rapport de mesure compilée comprenant ladite compilation d'informations d'emplacement d'équipement d'utilisateur pour ladite pluralité d'équipement d'utilisateur (10).

12. Centre d'emplacement mobile de passerelle (70) pour la communication dans un système de communication cellulaire,
ledit centre d'emplacement mobile de passerelle (70) étant configuré pour initier la transmission d'une requête d'emplacement destinée à un centre d'emplacement mobile de service évolué (80) ;
dans lequel ladite requête d'emplacement comprend des requêtes pour des informations d'emplacement d'équipement d'utilisateur d'une pluralité d'équipement d'utilisateur (10) associé à une zone définie ; et
ledit centre d'emplacement mobile de passerelle (70) étant en outre configuré pour obtenir une réponse d'emplacement comprenant une compilation d'emplacement pour ladite pluralité d'équipement d'utilisateur (10) associé à ladite zone définie, ladite réponse d'emplacement étant créée par ledit centre d'emplacement mobile de service évolué (80).

13. Centre d'emplacement mobile de service évolué (80) pour la communication dans un système de communication cellulaire,
ledit centre d'emplacement mobile de service évolué (80) étant configuré pour initier une transmission d'une requête d'initiation de mesure ;
dans lequel ladite requête d'initiation de mesure comprend des requêtes pour des informations d'équipement d'utilisateur liées à la position d'une pluralité d'équipement d'utilisateur (10) associé à une zone définie ; et
ledit centre d'emplacement mobile de service évolué (80) étant configuré pour créer une compilation d'emplacement pour la pluralité d'équipement d'utilisateur (10) associé à une zone définie, comme une réponse d'un rapport de mesure compilée, ladite compilation d'emplacement étant basée sur une compilation d'informations d'emplacement d'équipement d'utilisateur liées à la position pour ladite pluralité d'équipement d'utilisateur (10) reçu dans ledit rapport de mesure compilée.

14. Programme informatique (230;232) comprenant des instructions, qui lorsqu'elles sont exécutées par au moins un processeur (242), amènent le au moins un processeur (242) à initier une collecte d'informations d'équipement d'utilisateur liées à la position d'une pluralité d'équipement d'utilisateur (10) comme une réponse sur une requête d'initiation de mesure obtenue ;
dans lequel ladite requête d'initiation de mesure comprend des requêtes pour lesdites informations d'équipement d'utilisateur liées à la position associées à une zone définie, dont au moins une partie est située dans une zone de couverture d'un nœud de réseau (30) ;
dans lequel lesdites informations d'équipement d'utilisateur liées à la position comprennent au moins un emplacement dudit équipement d'utilisateur (10) ;
lesdites instructions, lorsqu'elles sont exécutées par ledit au moins un processeur (242), amènent en outre le au moins un processeur (242) à initier la formation d'une réponse de mesure à ladite requête d'initiation de mesure, dans lequel ladite réponse de mesure comprend une compilation d'au moins une partie desdites informations d'équipement d'utilisateur liées à la position pour la dite pluralité d'équipement d'utilisateur (10).

15. Produit de programme informatique comprenant un support lisible sur ordinateur (255) présentant le programme informatique (230; 232) selon la revendication 14 stocké dessus.
